# EUROPÄISCHE PATENTSCHRIFT

(11) **EP 3 027 666 B1**
(45) Veröffentlichungstag und Bekanntmachung des Hinweises auf die Patenterteilung: **17.11.2021**
(21) Anmeldenummer: 14755599.9
(22) Anmeldetag: 24.07.2014
(51) Int. Cl.: C08G 18/48, C08G 18/75, C08G 18/76, C08G 18/80, C08G 18/10, C08G 18/12, C08G 18/22, C08G 18/28, C08G 18/42, C07F 7/08, C09J 175/04

(54) **SILANGRUPPEN-HALTIGES POLYMER**
POLYMER CONTAINING SILANE GROUPS
POLYMÈRE CONTENANT DES GROUPES DE SILANES

(30) Priorität: 30.07.2013 EP 13178562
(43) Veröffentlichungstag der Anmeldung: 08.06.2016
(73) Patentinhaber: Sika Technology AG, 6340 Baar (CH)
(72) Erfinder: KRAMER, Andreas, CH-8006 Zürich (CH); BURCKHARDT, Urs, CH-8049 Zürich (CH); STADELMANN, Ursula, CH-8046 Zürich (CH)
(74) Vertreter: Sika Patent Attorneys
(86) Internationale Anmeldenummer: PCT/EP2014/065983
(87) Internationale Veröffentlichungsnummer: WO 2015/014725

(56) Entgegenhaltungen:
- EP-A2- 2 014 692
- DE-A1-102008 020 979
- DATABASE WPI Week 197817 Thomson Scientific, London, GB; AN 1978-31592A XP002686132, -& SU 555 104 A1 (SEREBRENNIKOVA E V) 25. April 1977 (1977-04-25)
- None

## Beschreibung

### Technisches Gebiet

Die Erfindung betrifft Silangruppen-haltige Polymere und ihre Verwendung als Bestandteil von feuchtigkeitshärtenden Zusammensetzungen, welche insbesondere zum Verkleben, Abdichten und Beschichten von Bau- und Industrieprodukten einsetzbar sind.

### Stand der Technik

Silangruppen-haltige Polymere, auch als "silanfunktionelle Polymere" oder "silanmodifizierte Polymere" (SMP) oder "silanterminierte Polymere" (STP) bezeichnet, werden seit einiger Zeit erfolgreich als Bindemittelsystem in feuchtigkeitshärtenden Zusammensetzungen eingesetzt, die insbesondere als elastische Klebstoffe, Dichtstoffe und Beschichtungen in der Bau- und Fertigungsindustrie Verwendung finden.

Ein einfach durchzuführender Weg zu Silangruppen-haltigen Polymeren, der von breit erhältlichen Rohstoffen ausgeht und damit kommerziell attraktiv ist, führt über die Umsetzung von Aminosilanen mit Isocyanatgruppen-haltigen Polyurethanpolymeren, wobei die Silangruppen schliesslich über Harnstoffgruppen ans Polymer gebunden sind. Die so erhältlichen Silangruppen-haltigen Polymere weisen aber entweder hohe Viskositäten auf, was das Formulieren von Zusammensetzungen mit guter Verarbeitbarkeit erschwert, oder ihre thermische Beständigkeit nach der Aushärtung ist eingeschränkt.

Interessante Eigenschaften in Bezug auf Viskosität und Wärmebeständigkeit weisen Silangruppen-haltige Polymere auf, deren Silangruppen über Urethananstelle von Harnstoffgruppen ans Polymer gebunden sind. Solche Silangruppen-haltige Polymere sind als Umsetzungsprodukte von Polyolen mit Isocyanatosilanen bekannt. Dieser Weg ist aber nur von beschränktem Interesse, da Isocyanatosilane teuer, wenig lagerfähig und stark toxisch sind.

Attraktiver wäre die Umsetzung von Isocyanatgruppen-haltigen Polyurethanpolymeren mit Hydroxysilanen. Aus dem Stand der Technik sind aber nur wenige Hydroxysilane bekannt. Deren Handhabung weist die Schwierigkeit auf, dass sie aufgrund einer schnellen Reaktion der Hydroxylgruppe mit der Silangruppe zur Selbstkondensation neigen und deshalb häufig sehr unrein und/oder wenig lagerstabil sind.

DE 10 2008 020979 A1 offenbart ein Verfahren zum Herstellen eines silylierten Polyurethans, sowie die Produkte dieses Verfahrens und deren Anwendung. Dabei werden Hydroxy- und Silan-funktionelle Zwischenprodukte mit einem Polyurethan umgesetzt. Diese Zwischenprodukte werden erhalten aus der Reaktion eines Aminosilans mit einem Carbonat oder einem Lacton.

Aus US 5,587,502 sind Hydroxycarbamoylsilane bekannt. Die beschriebenen Hydroxysilane weisen aber eine zu geringe Reinheit auf, um zur Herstellung von silanfunktionellen Polymeren wirklich interessant zu sein, und ihre Hydroxylgruppe ist nicht sehr reaktiv.

### Darstellung der Erfindung

Aufgabe der vorliegenden Erfindung ist es daher, ein Silangruppen-haltiges Polymer zur Verfügung zu stellen, welches eine tiefe Viskosität aufweist, mit Feuchtigkeit schnell vernetzt und geeignet ist als Bindemittel in feuchtigkeitshärtenden Zusammensetzungen, welche zu einem elastischen nichtklebrigen Material aushärten.

Überraschenderweise wurde gefunden, dass ein Polymer nach Anspruch 1 diese Aufgabe löst. Es weist eine tiefe Viskosität und eine ausgezeichnete Lagerstabilität auf und härtet mit Feuchtigkeit überraschend schnell zu einem elastischen Material mit guter Festigkeit und Dehnbarkeit aus. Das Polymer ist in einem einfachen Verfahren aus kommerziell gut erhältlichen Rohstoffen in hoher Reinheit herstellbar.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Polymer mit Endgruppen der Formel (I), 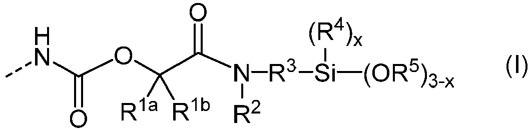 wobei
R^{1a} für einen einwertigen Kohlenwasserstoffrest mit 1 bis 12 C-Atomen steht;
R^{1b} für ein Wasserstoffatom oder einen einwertigen Kohlenwasserstoffrest mit 1 bis 12 C-Atomen stehtR² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht;
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht;
R⁴ für einen Alkylrest mit 1 bis 8 C-Atomen steht;
R⁵ für einen Alkylrest mit 1 bis 10 C-Atomen, der gegebenenfalls Ethergruppen enthält, steht; und
x für 0, 1 oder 2 steht.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom.

Entsprechend bezeichnet der Begriff "Alkoxysilan" oder kurz "Silan" eine organische Verbindung, welche mindestens eine Silangruppe aufweist.

Als "Hydroxysilan", "Isocyanatosilan", "Aminosilan" bzw. "Mercaptosilan" werden Silane bezeichnet, die am organischen Rest zusätzlich zur Silangruppe eine oder mehrere Hydroxyl-, Isocyanato-, Amino- bzw. Mercaptogruppen aufweisen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Der Begriff "Polyurethanpolymer" umfasst sämtliche Polymere, welche nach dem sogenannten Diisocyanat-Polyadditions-Verfahren hergestellt werden. Der Begriff "Polyurethanpolymer" umfasst auch Isocyanatgruppen aufweisende Polyurethanpolymere, wie sie aus der Umsetzung von Polyolen mit einem Überschuss an Polyisocyanaten erhältlich sind und selber Polyisocyanate darstellen und oft auch Prepolymere genannt werden.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Eine gestrichelte Linie in den Formeln in diesem Dokument stellt jeweils die Bindung zwischen einem Substituenten und dem zugehörigen Molekülrest dar. Als "lagerstabil" wird eine Substanz oder eine Zusammensetzung bezeichnet, wenn sie bei Raumtemperatur in einem geeigneten Gebinde während längerer Zeit, typischerweise während mehreren Wochen bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Raumtemperatur" wird eine Temperatur von ca. 23 °C bezeichnet.

Polymere mit Endgruppen der Formel (I), bei welchen R^{1a} und R^{1b} für unterschiedliche Substituenten stehen, sind chirale Verbindungen, welche isomerenrein oder als Isomerengemische vorliegen können.

Bei den Endgruppen der Formel (I) handelt es sich um Silangruppen. Silangruppen haben die Eigenschaft, bei Kontakt mit Feuchtigkeit zu hydrolysieren. Dabei bilden sich Silanolgruppen (Si-OH-Gruppen) und durch nachfolgende Kondensationsreaktionen Siloxangruppen (Si-O-Si-Gruppen).

Bevorzugt stehen R^{1a} und R^{1b} jeweils nicht für einen tertiären Alkylrest wie beispielsweise tert-Butyl. Ein tertiärer Alkylrest bewirkt eine starke sterische Hinderung, was für die Herstellung und für die Wärmestabilität des Polymers nachteilig sein kann.

R^{1a} steht bevorzugt für einen einwertigen Kohlenwasserstoffrest mit 1 bis 6 C-Atomen, welcher nicht über ein tertiäres C-Atom angebunden ist, insbesondere für Methyl, Ethyl, n-Propyl, Isopropyl, Butyl, sec-Butyl, Cyclopentyl, Cyclohexyl oder Phenyl. Ein solches Polymer ist sehr gut herstellbar.

R^{1a} steht besonders bevorzugt für einen einwertigen Kohlenwasserstoffrest mit 1 bis 6 C-Atomen, welcher über ein primäres C-Atom gebunden ist, insbesondere für Methyl, Ethyl, n-Propyl, Butyl oder sec-Butyl. Ein solches Polymer ist besonders gut herstellbar und weist gute mechanische Eigenschaften auf.

R^{1a} steht am meisten bevorzugt für einen Methylrest.

Ein Substituent R^{1a} in Form von Methyl weist den Vorteil auf, dass ein solches Polymer besonders gut zugänglich ist und besonders gute mechanische Eigenschaften aufweist.

R^{1b} steht besonders bevorzugt für ein Wasserstoffatom oder einen Methylrest, insbesondere für ein Wasserstoffatom.

Am meisten bevorzugt steht R^{1a} für einen Methylrest und R^{1b} für ein Wasserstoffatom. Ein solches Polymer ist besonders gut zugänglich, besonders gut herstellbar und weist besonders gute mechanische Eigenschaften auf.

R² steht bevorzugt für ein Wasserstoffatom oder einen Alkylrest oder einen Cycloalkylrest oder einen Alkoxysilylalkylrest. Ein solches Polymer ist besonders einfach zugänglich.

R² steht besonders bevorzugt für ein Wasserstoffatom. Ein solches Polymer ist besonders gut herstellbar.

R³ steht bevorzugt für einen linearen oder verzweigten Alkylenrest mit 1 bis 6 C-Atomen.

Besonders bevorzugt ist der Rest R³ ausgewählt aus der Gruppe bestehend aus 1,3-Propylen, 2-Methyl-1,3-propylen, 1,4-Butylen, 3-Methyl-1,4-butylen und 3,3-Dimethyl-1,4-butylen. Davon besonders bevorzugt sind 1,3-Propylen und 3,3-Dimethyl-1,4-butylen, insbesondere 1,3-Propylen.

Ein solches Polymer ist besonders gut zugänglich.

Die Stellung der Substituenten in den Resten R³ ist ausgehend vom Silicium-atom nummeriert.

R⁴ steht bevorzugt für einen Methylrest.

R⁵ steht bevorzugt für einen Methylrest oder Ethylrest, am meisten bevorzugt für einen Ethylrest.

Ein Polymer mit Methoxysilangruppen weist den Vorteil auf, dass es mit Feuchtigkeit besonders schnell vernetzt.

Ein Polymer mit Ethoxysilangruppen weist den Vorteil auf, dass es besonders lagerstabil ist und dass bei seiner Hydrolyse das wenig toxische Ethanol freigesetzt wird.

x steht bevorzugt für 0 oder 1, insbesondere für 0. Ein solches Polymer weist besonders reaktive Silangruppen auf.

Am meisten bevorzugt steht R^{1a} für Methyl, R^{1b} für Wasserstoff, R² für Wasserstoff, R⁵ für Ethyl und x für 0. Ein solches Polymer weist nach der Aushärtung eine sehr gute Wärmestabilität auf.

Bevorzugt weist das Polymer mit Endgruppen der Formel (I) eine Funktionalität bezogen auf die Endgruppen der Formel (I) im Bereich von 1 bis 4, besonders bevorzugt 1 bis 3, insbesondere 2 oder 3, am meisten bevorzugt von 2, auf. Ein solches Polymer ermöglicht gute mechanische Eigenschaften, insbesondere eine hohe Dehnbarkeit.

Bevorzugt weist das Polymer mit Endgruppen der Formel (I) ein mittleres Molekulargewicht im Bereich von 1'000 bis 30'000 g/mol, bevorzugt 2'000 bis 25'000 g/mol, besonders bevorzugt 3'000 bis 20'000 g/mol, und insbesondere von 4'000 bis 15'000 g/mol, auf. Ein solches Polymer ermöglicht gute mechanische Eigenschaften.

Ein bevorzugtes Polymer mit Endgruppen der Formel (I) ist bei Raumtemperatur flüssig und weist mehrheitlich Polyoxyalkyleneinheiten, insbesondere Polyoxypropyleneinheiten, auf. Seine Endgruppen der Formel (I) sind mehrheitlich an cycloaliphatische oder aromatische Reste gebunden, insbesondere an cycloaliphatische Reste abgeleitet von Isophorondiisocyanat. Ein solches Polymer weist eine tiefe Viskosität auf und ermöglicht gute elastische Eigenschaften. Es eignet sich insbesondere als Bestandteil von bei Raumtemperatur applizierbaren, elastischen Beschichtungen und elastischen Klebstoffen und/oder Dichtstoffen. Mit an cycloaliphatische Reste gebundenen Endgruppen der Formel (I) ist es zudem besonders lichtstabil. Ein solches Polymer ist bevorzugt frei von Isocyanatgruppen.

Ein weiteres bevorzugtes Polymer mit Endgruppen der Formel (I) weist mehrheitlich Polyester- und/oder Polycarbonateinheiten, insbesondere Polyestereinheiten, auf und ist bei Raumtemperatur fest. Seine Endgruppen der Formel (I) sind mehrheitlich an cycloaliphatische oder aromatische Reste gebunden, bevorzugt an aromatische Reste, insbesondere abgeleitet von 4,4'-, 2,4'- und/oder 2,2'-Diphenylmethandiisocyanat und beliebige Gemische dieser Isomeren (MDI). Ein solches Polymer eignet sich insbesondere als Bestandteil von heiss applizierbaren Klebstoffen, sogenannten Heissschmelzklebstoffen. Ein solches Polymer kann neben Endgruppen der Formel (I) auch Isocyanatgruppen enthalten.

Ein weiterer Gegenstand der Erfindung ist ein Verfahren zur Herstellung eines Polymers mit Endgruppen der Formel (I) durch Umsetzung von
- mindestens einem Polyol,
- mindestens einem Diisocyanat,
- entweder mindestens einem Lactid der Formel (II) oder mindestens einem Hydroxyester der Formel (III), und
- mindestens einem Aminosilan der Formel (IV).

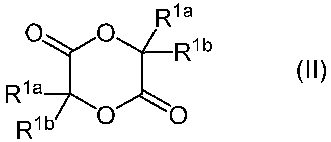

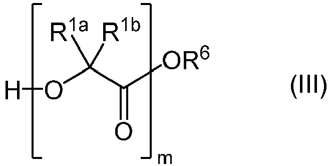

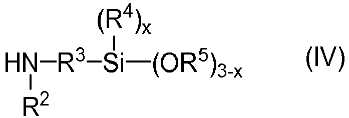

In den Formeln (II), (III) und (IV) stehen
m für eine ganze Zahl von 1 bis 100;
R⁶ für einen einwertigen Kohlenwasserstoffrest mit 1 bis 12 C-Atomen; und
R^{1a}, R^{1b}, R², R³, R⁴, R⁵ und x weisen die bereits genannten Bedeutungen auf.

Das Verfahren kann in verschiedenen Ausführungsformen durchgeführt werden, wobei die Verbindungen a), b), c) und d) in unterschiedlicher Reihenfolge und in mehreren Schritten zum Polymer mit Endgruppen der Formel (I) umgesetzt werden.

In einer Ausführungsform, im folgenden auch Verfahren **V1** genannt, wird in einem ersten Schritt ein Polyol und ein Diisocyanat zu einem Isocyanatgruppen aufweisenden Polyurethanpolymer umgesetzt. In einem zweiten Schritt wird entweder ein Lactid der Formel (II) oder ein Hydroxyester der Formel (III) mit einem Aminosilan der Formel (IV) zu einem Hydroxysilan der Formel (V) umgesetzt. In einem dritten Schritt werden das Isocyanatgruppen aufweisende Polyurethanpolymer und das Hydroxysilan der Formel (V) zum Polymer mit Endgruppen der Formel (I) umgesetzt.

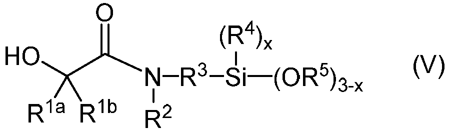

In der Formel (V) weisen R^{1a}, R^{1b}, R², R³, R⁴, R⁵ und x die bereits genannten Bedeutungen auf.

In einer weiteren Ausführungsform, im folgenden auch Verfahren **V2** genannt, wird in einem ersten Schritt ein Polyol und ein Diisocyanat zu einem Isocyanatgruppen aufweisenden Polyurethanpolymer umgesetzt. Dieses wird in einem zweiten Schritt mit einem Hydroxyester der Formel (III) mit m=1 zu einem Polymer mit Estergruppen der Formel (VI) umgesetzt, welches in einem dritten Schritt mit dem Aminosilan der Formel (IV) zum Polymer mit Endgruppen der Formel (I) umgesetzt wird.

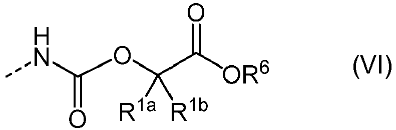

In der Formel (VI) weisen R^{1a}, R^{1b} und R⁶ die bereits genannten Bedeutungen auf.

In einer weiteren Ausführungsform, im folgenden auch Verfahren **V3** genannt, wird in einem ersten Schritt entweder ein Lactid der Formel (II) oder ein Hydroxyester der Formel (III) mit einem Aminosilan der Formel (IV) zu einem Hydroxysilan der Formel (V) umgesetzt. Das Hydroxysilan der Formel (V) wird in einem zweiten Schritt mit einem Diisocyanat zu einem Isocyanatosilan der Formel (VII) umgesetzt, welches in einem dritten Schritt mit einem Polyol zum Polymer mit Endgruppen der Formel (I) umgesetzt wird.

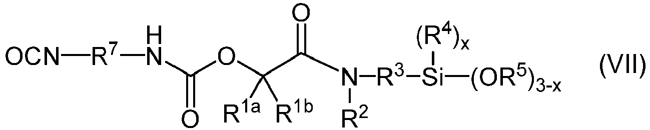

In der Formel (VII) steht R⁷ für einen zweiwertigen Kohlenwasserstoffrest mit 4 bis 16 C-Atomen und R^{1a}, R^{1b}, R², R³, R⁴, R⁵ und x weisen die bereits genannten Bedeutungen auf.

Bevorzugt steht R⁷ für 1,6-Hexylen, 2,2,4- und/oder 2,4,4-Trimethyl-1,6-hexylen, 1,3- und/oder 1,4-Cyclohexylen, 1,3- und/oder 1,4-Xylylen, 1,3- und/oder 1,4-Tetramethylxylylen, 4,4'- und/oder 2,4'-substituiertes Diphenylmethan, 2,4- und/oder 2,6-substituiertes Toluol oder IPDI nach Entfernung der zwei Isocyanatgruppen, insbesondere für IPDI nach Entfernung der zwei Isocyanatgruppen. Diese Isocyanatosilane stellen gut zugängliche, lagerstabile Substanzen dar.

Besonders bevorzugte Isocyanatosilane der Formel (VII) sind ausgewählt aus der Gruppe bestehend aus 1-Oxo-1-((3-(triethoxysilyl)propyl)amino)-2-propyl ((5-isocyanato-1 ,3,3-trimethylcyclohexyl)methyl)carbamat; 1-Oxo-1-((3-(tri-ethoxysilyl)propyl)amino)-2-propyl 3,5,5-trimethyl-3-(isocyanatomethyl)cyclo-hexylcarbamat; 1-Oxo-1-((3-(triethoxysilyl)propyl)amino)-2-propyl 4-methyl-3-isocyanato-phenylcarbamat; 1-Oxo-1-((3-(triethoxysilyl)propyl)amino)-2-propyl 2-methyl-3-isocyanato-phenylcarbamat; sowie entsprechende Verbindungen mit Trimethoxysilyl- oder mit Dimethoxymethylsilylgruppen.

Davon besonders bevorzugt sind die Verbindungen mit Ethoxysilangruppen. Sie sind besonders lagerstabil und toxikologisch vorteilhaft.

Davon weiterhin besonders bevorzugt sind die cycloaliphatischen Verbindungen. Sie sind besonders lagerstabil.

Im Folgenden werden die genannten Ausführungsformen des Verfahrens näher ausgeführt.

Im Verfahren **V1** wird im ersten Schritt ein Polyol mit einem Diisocyanat zu einem Isocyanatgruppen aufweisenden Polyurethanpolymer umgesetzt.

Diese Umsetzung wird bevorzugt unter Feuchtigkeitsausschluss bei einer Temperatur von 50 °C bis 160 °C durchgeführt, gegebenenfalls in Anwesenheit geeigneter Katalysatoren, wobei das Diisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Polyurethanpolymer nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Im Verfahren **V1** wird im zweiten Schritt entweder ein Lactid der Formel (II) oder ein Hydroxyester der Formel (III) mit einem Aminosilan der Formel (IV) zu einem Hydroxysilan der Formel (V) umgesetzt.

Im Fall eines Lactids der Formel (II) wird diese Umsetzung bevorzugt unter Feuchtigkeitsausschluss bei einer Temperatur im Bereich von 15 bis 120 °C, insbesondere 20 bis 90 °C, durchgeführt, gegebenenfalls in Anwesenheit eines Katalysators und/oder eines Trocknungsmittels wie insbesondere Vinyltriethoxysilan, Tetraethoxysilan, Vinyltrimethoxysilan oder einem Molekularsieb. Es werden bevorzugt ungefähr zwei Mol Aminosilan pro Mol Lactid eingesetzt. Insbesondere wird mit einem Aminosilan/Lactid-Verhältnis im Bereich von 1.8 bis 2.2 gearbeitet. Die Umsetzung kann lösemittelfrei oder in einem geeigneten Lösemittel erfolgen. Nach der Umsetzung können allfällig vorhandene flüchtige Verbindungen, insbesondere Lösemittel, unreagierte Edukte oder freigesetzter Alkohol, destillativ aus dem Reaktionsprodukt entfernt werden.

Im Fall eines Hydroxyesters der Formel (III) wird diese Umsetzung bevorzugt unter Feuchtigkeitsausschluss bei einer Temperatur im Bereich von 40 bis 150 °C durchgeführt, gegebenenfalls in Anwesenheit eines Trocknungsmittels wie insbesondere Vinyltriethoxysilan, Tetraethoxysilan, Vinyltrimethoxysilan oder einem Molekularsieb. Bevorzugt wird ein Katalysator eingesetzt, insbesondere eine Metallverbindung, insbesondere ein Titanat, ein Stannat oder ein Aluminat. Es wird bevorzugt ungefähr ein Mol Aminosilan der Formel (IV) pro Estergruppe des Hydroxyesters eingesetzt. Ein Hydroxyester der Formel (III), bei welchem m für 1 steht, wird also bevorzugt ungefähr im Molverhältnis 1:1 mit dem Aminosilan umgesetzt. Ein polymerer Hydroxyester, bei welchem beispielsweise m für 10 steht, wird dementsprechend bevorzugt ungefähr im Molverhältnis 1:10 mit dem Aminosilan umgesetzt. Bevorzugt wird mit einem Aminosilan/Hydroxyester-Verhältnis im Bereich von (0.8 bis 1.2)m gearbeitet. Die Umsetzung kann lösemittelfrei oder in einem geeigneten Lösemittel erfolgen.

Bevorzugt wird nach der Umsetzung der freigesetzte Alkohol, zusammen mit allfällig vorhandenen weiteren flüchtigen Verbindungen, insbesondere Lösemittel oder unreagierte Edukte, destillativ aus dem Reaktionsprodukt entfernt. Das Hydroxysilan der Formel (I) kann Folgeprodukte aus der Hydrolyse und/oder Kondensation der Silangruppen enthalten, auch solche aus einer intra- oder intermolekularen Selbstkondensation mit der Hydroxylgruppe. Bevorzugte Hydroxysilane der Formel (V) enthalten nur geringe Mengen solcher Folgeprodukte.

Im Verfahren **V1** wird im dritten Schritt das Isocyanatgruppen aufweisende Polyurethanpolymer mit dem Hydroxysilan der Formel (V) zum Polymer mit Endgruppen der Formel (I) umgesetzt.

Diese Umsetzung wird bevorzugt unter Feuchtigkeitsausschluss bei einer Temperatur im Bereich von 20 bis 160 °C durchgeführt. Gegebenenfalls wird ein Katalysator eingesetzt, insbesondere ein tertiäres Amin oder eine Metallverbindung, insbesondere eine Bismut(III)-, Zink(II)-, Zirkonium(IV)- oder Zinn(II)-Verbindung oder eine Organozinn(IV)-Verbindung. Das Hydroxysilan der Formel (V) wird dabei bevorzugt in einem überstöchiometrischen oder stöchiometrischen Verhältnis zu den Isocyanatgruppen eingesetzt, so dass ein Polymer mit Endgruppen der Formel (I) erhalten wird, welches frei ist von Isocyanatgruppen. Insbesondere wird mit einem OH/NCO-Verhältnis im Bereich von 1 bis 1.25 gearbeitet. Die Umsetzung wird vorteilhaft durch Messung des Isocyanatgehalts des erhaltenen Polymers kontrolliert, beispielsweise mittels IR-Spektroskopie.

Für den Fall, dass das Hydroxysilan der Formel (V) unterstöchiometrisch eingesetzt wurde, enthält das erhaltene Polymer neben den Endgruppen der Formel (I) zusätzlich Isocyanatgruppen. Ein solches Polymer wird bevorzugt hergestellt, indem ein OH/NCO-Verhältnis im Bereich von 0.1 bis 0.9, besonders bevorzugt 0.2 bis 0.8, insbesondere 0.3 bis 0.7, verwendet wird. Das erhaltene Polymer weist einen deutlich reduzierten Gehalt an monomerem Diisocyanat auf im Vergleich zum eingesetzten Isocyanatgruppen aufweisenden Polyurethanpolymer, was aus toxikologischen Gründen vorteilhaft ist.

Im Verfahren **V2** wird im ersten Schritt ein Polyol und ein Diisocyanat zu einem Isocyanatgruppen aufweisenden Polyurethanpolymer umgesetzt, auf die gleiche Weise wie im ersten Schritt des Verfahrens **V1.**

Im Verfahren **V2** wird im zweiten Schritt das Isocyanatgruppen aufweisende Polyurethanpolymer mit einem Hydroxyester der Formel (III) mit m=1 zu einem Polymer mit Estergruppen der Formel (VI) umgesetzt. Diese Umsetzung wird bevorzugt unter Feuchtigkeitsausschluss bei einer Temperatur im Bereich von 20 bis 160 °C, durchgeführt, gegebenenfalls in Anwesenheit eines Katalysators, insbesondere einer Bismut(III)-, Zink(II)-, Zirkonium(IV)- oder Zinn(II)-Verbindung oder einer Organozinn(IV)-Verbindung. Der Hydroxyester und das Isocyanatgruppen aufweisende Polyurethanpolymer werden bevorzugt ungefähr stöchiometrisch bezogen auf die Hydroxyl- und die Isocyanatgruppen eingesetzt, insbesondere im OH/NCO-Verhältnis im Bereich von 1 bis 1.2.

Im Verfahren **V2** wird im dritten Schritt das Polymer mit Estergruppen der Formel (VI) mit einem Aminosilan der Formel (IV) zum Polymer mit Endgruppen der Formel (I) umgesetzt. Diese Umsetzung wird bevorzugt unter Feuchtigkeitsausschluss bei einer Temperatur im Bereich von 40 bis 160 °C durchgeführt. Es wird bevorzugt ein Katalysator eingesetzt, insbesondere eine Metallverbindung, insbesondere ein Titanat, ein Stannat oder ein Aluminat. Das Aminosilan der Formel (IV) wird bevorzugt stöchiometrisch oder leicht überstöchiometrisch bezogen auf die Estergruppen der Formel (VI) eingesetzt. Bevorzugt wird nach der Umsetzung der freigesetzte Alkohol zusammen mit allfällig vorhandenen weiteren flüchtigen Verbindungen, insbesondere Lösemittel oder unreagierte Edukte, destillativ aus dem Reaktionsprodukt entfernt.

Im Verfahren **V3** wird im ersten Schritt entweder ein Lactid der Formel (II) oder ein Hydroxyester der Formel (III) mit einem Aminosilan der Formel (IV) zu einem Hydroxysilan der Formel (V) umgesetzt, auf die gleiche Weise wie im zweiten Schritt des Verfahrens **V1.**

Im Verfahren **V3** wird im zweiten Schritt das Hydroxysilan der Formel (V) mit einem Diisocyanat zu einem Isocyanatosilan der Formel (VII) umgesetzt. Diese Umsetzung wird bevorzugt unter Feuchtigkeitsausschluss bei einer Temperatur im Bereich von 20 bis 120 °C durchgeführt. Gegebenenfalls wird ein Katalysator eingesetzt, insbesondere ein tertiäres Amin oder eine Metallverbindung, insbesondere eine Bismut(III)-, Zink(II)-, Zirkonium(IV)- oder Zinn(II)-Verbindung oder eine Organozinn(IV)-Verbindung. Bevorzugt wird dabei ungefähr ein Mol Hydroxysilan pro Mol Diisocyanat eingesetzt. Insbesondere wird mit einem NCO/OH-Verhältnis im Bereich von 1.8 bis 2.2 gearbeitet.

Im Verfahren **V3** wird im dritten Schritt das Isocyanatosilan der Formel (VII) mit einem Polyol zum Polymer mit Endgruppen der Formel (I) umgesetzt. Diese Umsetzung wird bevorzugt unter Feuchtigkeitsausschluss bei einer Temperatur im Bereich von 50 bis 160 °C durchgeführt. Gegebenenfalls wird ein Katalysator eingesetzt, insbesondere ein tertiäres Amin oder eine Metallverbindung, insbesondere eine Bismut(III)-, Zink(II)-, Zirkonium(IV)- oder Zinn(II)-Verbindung oder eine Organozinn(IV)-Verbindung. Bevorzugt wird dabei mit einem NCO/OH-Verhältnis im Bereich von 1.8 bis 2.2 gearbeitet.

Bevorzugt wird das Verfahren zur Herstellung des Polymers mit Endgruppen der Formel (I) über ein Hydroxysilan der Formel (V) als Zwischenprodukt geführt, also gemäss Verfahren **V1** oder **V3**. Diese Herstellung ist besonders einfach durchführbar und ermöglicht ein Polymer mit Endgruppen der Formel (I) mit besonders guten mechanischen Eigenschaften.

Bevorzugt ist das Hydroxysilan dabei ausgewählt aus der Gruppe bestehend aus N-(3-Triethoxysilylpropyl)-2-hydroxyacetamid, N-(3-Trimethoxysilylpropyl)-2-hydroxyacetamid, N-(3-Diethoxymethylsilylpropyl)-2-hydroxyacetamid, N-(3-Dimethoxymethylsilylpropyl)-2-hydroxyacetamid, N-(3-Triethoxysilylpropyl)-2-hydroxypropanamid, N-(3-Trimethoxysilylpropyl)-2-hydroxypropanamid, N-(3-Diethoxymethylsilylpropyl)-2-hydroxypropanamid, N-(3-Dimethoxymethylsilyl-propyl)-2-hydroxypropanamid, N-(3-Triethoxysilylpropyl)-2-hydroxy-2-methyl-propanamid, N-(3-Trimethoxysilylpropyl)-2-hydroxy-2-methylpropanamid, N-(3-Diethoxymethylsilylpropyl)-2-hydroxy-2-methylpropanamid und N-(3-Dimetho-xymethylsilylpropyl)-2-hydroxy-2-methylpropanamid. Diese Hydroxysilane sind einfach zugänglich und ihre Hydroxylgruppe ist von sehr hoher Reaktivität. Davon bevorzugt sind die Trialkoxysilane, insbesondere die Triethoxysilane. Besonders bevorzugt sind N-(3-Trimethoxysilylpropyl)-2-hydroxypropanamid und N-(3-Triethoxysilylpropyl)-2-hydroxypropanamid.

Am meisten bevorzugt ist N-(3-Triethoxysilylpropyl)-2-hydroxypropanamid. Es ist besonders lagerstabil und bei seiner Hydrolyse wird Ethanol freigesetzt, was aus toxikologischen Gründen vorteilhaft ist. Zudem ermöglicht es Polymere mit Endgruppen der Formel (I) mit besonders guter Wärmebeständigkeit nach der Aushärtung.

Bevorzugt wird für die Herstellung eines Hydroxysilans der Formel (V) ein Lactid der Formel (II) verwendet. Aus dieser Herstellung ist bei besonders milden Bedingungen ein Hydroxysilan von hoher Reinheit erhältlich, welches ein Polymer mit Endgruppen der Formel (I) mit ganz besonders guten mechanischen Eigenschaften ermöglicht.

Am meisten bevorzugt ist ein Verfahren zur Herstellung eines Polymers mit Endgruppen der Formel (I), bei welchem ein Lactid der Formel (II) mit einem Aminosilan der Formel (IV) zu einem Hydroxysilan der Formel (V) umgesetzt wird, welches anschliessend mit einem Isocyanatgruppen aufweisenden Polyurethanpolymer aus der Umsetzung eines Polyols mit einem Diisocyanat umgesetzt wird.

Im Verfahren zur Herstellung eines Polymers mit Endgruppen der Formel (I) wird mindestens ein Polyol eingesetzt. Geeignete Polyole sind insbesondere die folgenden handelsübliche Polyole oder beliebige Mischungen davon:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Bevorzugt sind Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren).

Besonders geeignet sind Polyoxyalkylendiole oder Polyoxyalkylentriole, insbesondere Polyoxyethylen- und Polyoxypropylendi- und -triole. Weiterhin besonders geeignet sind sogenannte Ethylenoxid-terminierte (EOendcapped) Polyoxypropylenpolyole. Letztere sind Polyoxyethylen-polyoxypropylen-Mischpolyole, die beispielsweise dadurch erhalten werden, dass Polyoxypropylenpolyole nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caproiacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol bevorzugt sind Polyoxyalkylenpolyole, Polyesterpolyole, Polycarbonatpolyole und Polyacrylatpolyole.

Besonders bevorzugt sind einerseits bei Raumtemperatur flüssige Polyoxypropylenpolyole und Polyoxyethylenpolyoxypropylen-Mischpolyole, insbesondere Polyoxypropylendiole mit einem mittleren Molekulargewicht im Bereich von 1'000 bis 20'000 g/mol, bevorzugt von 2'000 bis 20'000 g/mol.

Besonders bevorzugt sind weiterhin bei Raumtemperatur feste, amorphe oder teilkristalline oder kristalline Polyole, insbesondere Polyesterpolyole und Polycarbonatpolyole, insbesondere Polyesterdiole mit einem mittleren Molekulargewicht im Bereich von 1'500 bis 15'000 g/mol, bevorzugt 1'500 bis 8000 g/mol, insbesondere 2'000 bis 5'500 g/mol. Besonders geeignet sind kristalline oder teilkristalline Adipinsäure/Hexandiol-Polyester und Dodecandicarbonsäure/Hexandiol-Polyester.

Im Verfahren zur Herstellung eines Polymers mit Endgruppen der Formel (I) wird mindestens ein Diisocyanat eingesetzt. Geeignete Diisocyanate sind insbesondere im Handel erhältliche aliphatische, cycloaliphatische, arylaliphatische und aromatische, bevorzugt cycloaliphatische und aromatische, Diisocyanate.

Bevorzugte Diisocyanate sind 1,6-Hexamethylendiisocyanat (HDI), 2,2,4- und 2,4,4-Trimethyl-1,6-hexamethylendiisocyanat (TMDI), Cyclohexan-1,3- und - 1,4-diisocyanat und beliebige Gemische dieser Isomeren, 1-Isocyanato-3,3,5-trimethyl-5-isocyanatomethyl-cyclohexan (=lsophorondiisocyanat oder IPDI), Perhydro-2,4'- und -4,4'-diphenylmethandiisocyanat (HMDI), m- und p-Xylylendiisocyanat (m- und p-XDI), m- und p-Tetramethyl-1,3- und -1,4-xylylendiisocyanat (m- und p-TMXDI), 2,4- und 2,6-Toluylendiisocyanat (TDI) und beliebige Gemische dieser Isomeren, 4,4'-, 2,4'- und 2,2'-Diphenylmethandiisocyanat und beliebige Gemische dieser Isomeren (MDI).

Besonders bevorzugt ist das Diisocyanat ausgewählt aus der Gruppe bestehend aus HDI, IPDI, MDI und TDI. Diese Diisocyanate sind besonders leicht erhältlich.

Für die Umsetzung mit bei Raumtemperatur festen Polyolen ist MDI am meisten bevorzugt. Damit sind insbesondere Heissschmelzklebstoffe mit besonders vorteilhaften Eigenschaften zugänglich.

Für die Umsetzung mit bei Raumtemperatur flüssigen Polyolen oder mit einem Hydroxysilan der Formel (V) sind IPDI und TDI am meisten bevorzugt. Damit werden Umsetzungsprodukte mit niedrigerer Viskosität erhalten. Ganz besonders bevorzugt ist IPDI. Damit sind besonders lichtechte Polymere erhältlich.

Im Verfahren zur Herstellung eines Polymers mit Endgruppen der Formel (I) kann mindestens ein Lactid der Fomel (II) eingesetzt werden.

Als Lactid der Formel (II) geeignet sind insbesondere 1,4-Dioxan-2,5-dion (Lactid aus 2-Hydroxyessigsäure, auch "Glycolid" genannt), 3,6-Dimethyl-1,4-dioxan-2,5-dion (Lactid aus Milchsäure, auch "Lactid" genannt) und 3,6-Diphenyl-1,4-dioxan-2,5-dion (Lactid aus Mandelsäure). Diese Lactide sind besonders gut zugänglich.

Bevorzugt sind 1,4-Dioxan-2,5-dion und 3,6-Dimethyl-1,4-dioxan-2,5-dion. Aus diesen Lactiden sind Hydroxysilane mit sehr guter Lagerstabilität und einer sehr reaktiven Hydroxylgruppe erhältlich.

Besonders bevorzugt ist 3,6-Dimethyl-1,4-dioxan-2,5-dion. Aus diesem Lactid sind Hydroxysilane mit einer besonders guten Lagerstabilität und einer sehr reaktiven Hydroxylgruppe erhältlich. Insbesondere das Lactid aus L-Milchsäure, auch L-Lactid oder (3S,6S)-3,6-Dimethyl-1,4-dioxan-2,5-dion genannt, ist besonders gut zugänglich, und es handelt sich dabei um einen nachwachsenden Rohstoff.

Im Verfahren zur Herstellung eines Polymers mit Endgruppen der Formel (I) kann mindestens ein Hydroxyester der Formel (III) eingesetzt werden.

Als Hydroxyester der Formel (III) geeignet sind insbesondere die Methylester, Ethylester, Isopropylester, n-Propylester, tert-Butylester, n-Butylester und sec-Butylester von 2-Hydroxyessigsäure, 2-Hydroxypropionsäure (Milchsäure), 2-Hydroxybuttersäure, 2-Hydroxy-2-methylpropionsäure (2-Hydroxyisobuttersäure), 2-Hydroxypentansäure, 2-Hydroxy-3-methylbuttersäure, 2-Hydroxyhexansäure, 2-Hydroxy-4-methylpentansäure, 2-Hydroxy-2-cyclohexylessigsäure (Hexahydromandelsäure), 2-Hydroxy-2-phenylessigsäure (Mandelsäure), 2-Hydroxy-2-cyclopentylessigsäure und 2-Hydroxy-2-cyclohexylessigsäure, sowie oligomere Formen dieser Hydroxyester, also Verbindungen der Formel (III) mit m > 1.

Bevorzugt sind die Methylester und die Ethylester von 2-Hydroxyessigsäure, Milchsäure, 2-Hydroxyisobuttersäure und oligomere Formen dieser Hydroxyester. Dabei sind die Methylester bevorzugt für die Umsetzung mit Aminosilanen mit Methoxygruppen und die Ethylester bevorzugt zur Umsetzung mit Aminosilanen mit Ethoxygruppen.

Besonders bevorzugt sind Milchsäuremethylester und Milchsäureethylester und oligomere Formen davon, insbesondere L-Milchsäuremethylester und L-Milchsäureethylester. Bei den L-Milchsäureestern handelt es sich um nachwachsende Rohstoffe. Am meisten bevorzugt ist L-Milchsäureethylester.

Im Verfahren zur Herstellung eines Polymers mit Endgruppen der Formel (I) wird weiterhin mindestens ein Aminosilan der Formel (IV) eingesetzt.

Als Aminosilan der Formel (IV) geeignet sind insbesondere Aminosilane mit einer primären Aminogruppe, insbesondere 3-Aminopropyltriethoxysilan, 3-Aminopropyltrimethoxysilan, 3-Aminopropyldiethoxymethylsilan, 3-Aminopropyldimethoxymethylsilan, 4-Aminobutyltriethoxysilan, 4-Aminobutyltrimethoxysilan, 4-Aminobutyldiethoxymethylsilan, 4-Aminobutyldimethoxymethylsilan,4-Amino-3-methylbutyltriethoxysilan, 4-Amino-3-methylbutyltrimethoxysilan, 4-Amino-3-methylbutyldiethoxymethylsilan, 4-Amino-3-methylbutyldimethoxy-methylsilan, 4-Amino-3,3-dimethylbutyltriethoxysilan, 4-Amino-3,3-dimethyl-butyltrimethoxysilan, 4-Amino-3,3-dimethylbutyldiethoxymethylsilan, 4-Amino-3,3-dimethylbutyldimethoxymethylsilan, Aminomethyltriethoxysilan, Aminomethyltrimethoxysilan, Aminomethyldiethoxymethylsilan und Aminomethyldimethoxymethylsilan.

Davon bevorzugt sind 3-Aminopropyltriethoxysilan, 3-Aminopropyltrimethoxysilan, 3-Aminopropyldiethoxymethylsilan, 3-Aminopropyldimethoxymethylsilan, 4-Amino-3,3-dimethylbutyltriethoxysilan, 4-Amino-3,3-dimethylbutyltrimethoxy-silan, 4-Amino-3,3-dimethylbutyldiethoxymethylsilan und 4-Amino-3,3-dimethyl-butyldimethoxymethylsilan.

Besonders bevorzugt sind 3-Aminopropyltriethoxysilan und 3-Aminopropyl-trimethoxysilan, insbesondere 3-Aminopropyltriethoxysilan.

Als Aminosilan der Formel (IV) weiterhin geeignet sind Aminosilane mit einer sekundären Aminogruppe, insbesondere Bis(trimethoxysilylpropyl)amin, Bis-(triethoxysilylpropyl)amin, N-Methyl-3-aminopropyltrimethoxysilan, N-Methyl-3-aminopropyltriethoxysilan, N-(n-Butyl)-3-aminopropyltrimethoxysilan, N-(n-Butyl)-3-aminopropyltriethoxysilan, N-Ethyl-3-amino-2-methylpropyltrimethoxy-silan, N-Ethyl-3-amino-2-methylpropyltriethoxysilan, N-(3-Trimethoxysilylpro-pyl)-amino-bernsteinsäurediethylester, N-(3-Triethoxysilylpropyl)-amino-bern-steinsäurediethylester, N-Cyclohexyl-aminomethyltriethoxysilan und N-Cyclohexyl-aminomethyltrimethoxysilan.

Bei der Herstellung des Polymers mit Endgruppen der Formel (I) können zusätzlich zum Polyol weitere Alkohole mitverwendet werden, insbesondere niedrigmolekulare ein- oder mehrwertige Alkohole oder polymere Monole. Solche Alkohole können während dem beschriebenen Herstellverfahren als Zusatz zum Polyol mitverwendet werden, oder sie können nach der Durchführung des Verfahrens zugesetzt werden, beispielsweise um mit vorhandenen Isocyanatgruppen zu reagieren. Es kann inbesondere vorteilhaft sein, ein Polymer mit Endgruppen der Formel (I), welches zusätzlich Isocyanatgruppen enthält, mit beispielsweise Ethanol zu versetzten, um die Isocyanatgruppen umzusetzen. Anschliessend kann überschüssiger Ethanol destillativ entfernt werden.

Das Polymer mit Endgruppen der Formel (I) ist unter Ausschluss von Feuchtigkeit gut lagerstabil. Bei Kontakt mit Feuchtigkeit hydrolysieren die Endgruppen der Formel (I). Dabei bilden sich Silanolgruppen (Si-OH-Gruppen) und durch nachfolgende Kondensationsreaktionen Siloxangruppen (Si-O-Si-Gruppen). Gegebenenfalls vorhandene weitere feuchtigkeitsreaktive Gruppen, insbesondere Isocyanatgruppen, reagieren ebenfalls mit vorhandener Feuchtigkeit. Als Ergebnis dieser Reaktionen härtet das Polymer zu einem vernetzten Kunststoff aus. Das Wasser für die Aushärtung kann entweder aus der Luft stammen (Luftfeuchtigkeit), oder das Polymer kann mit einer Wasser enthaltenden Komponente in Kontakt gebracht werden, zum Beispiel durch Bestreichen, Besprühen oder Einmischen. Während der Aushärtung können Silanolgruppen mit beispielsweise Hydroxylgruppen eines Substrates, auf welchem das Polymer appliziert ist, kondensieren, wodurch bei der Vernetzung eine zusätzliche Verbesserung der Haftung auf dem Substrat erfolgen kann.

Das Polymer mit Endgruppen der Formel (I) weist vorteilhafte Eigenschaften auf. Es weist eine niedrige Viskosität auf, was für seine weitere Verarbeitung als härtbare Zusammensetzung vorteilhaft ist. Es ist sehr lagerstabil und härtet mit Feuchtigkeit bei einer langen Offenzeit überraschend schnell zu einem vernetzten Material aus, welches über gute Haftungseigenschaften verfügt.

Ein bei Raumtemperatur flüssiges Polymer mit Endgruppen der Formel (I) härtet mit Feuchtigkeit bei Raumtemperatur zu einem elastischen, nichtklebrigen

Material mit hoher Festigkeit, hoher Dehnbarkeit und sehr guter Wärmebeständigkeit aus. Bei hohen Temperaturen wie 90 °C oder 100 °C bleibt das ausgehärtete Polymer auch nach längerer Exposition elastisch, während viele Silangruppen-haltige Polymere aus dem Stand der Technik bereits nach wenigen Tagen jegliche Festigkeit verlieren oder gar zerfliessen.

Ein bei Raumtemperatur festes Polymer mit Endgruppen der Formel (I) weist im unvernetzten Zustand eine gute thermische Stabilität auf, das heisst, es kann im erhitzten, geschmolzenen Zustand einige Zeit belassen werden, ohne dass eine starke Viskositätserhöhung oder Gelierung eintritt. Es vernetzt mit Feuchtigkeit zu einem Material von hoher Haftkraft, welches beim erneuten Erhitzen nicht mehr aufschmelzbar ist.

Das Polymer mit Endgruppen der Formel (I) ist besonders geeignet zur Verwendung als Bestandteil einer härtbaren Zusammensetzung, welche mindestens einen weiteren Bestandteil umfasst.

Bevorzugt stellt die härtbare Zusammensetzung entweder eine bei Raumtemperatur applizierbare feuchtigkeitshärtende Zusammensetzung oder einen Silangruppen-haltigen Heissschmelzklebstoff dar.

Eine bei Raumtemperatur applizierbare feuchtigkeitshärtende Zusammensetzung enthält ein bei Raumtemperaur flüssiges Polymer mit Endgruppen der Formel (I) und mindestens einen weiteren Bestandteil. Eine solche Zusammensetzung kann insbesondere als elastischer Klebstoff und/oder elastischer Dichtstoff oder elastische Beschichtung verwendet werden.

Bevorzugt weist eine solche feuchtigkeitshärtende Zusammensetzung einen Gehalt an Polymer mit Endgruppen der Formel (I) von 5 bis 90 Gewichts-%, insbesondere 10 bis 60 Gewichts-%, auf. Als weitere Bestandteile sind insbesondere Katalysatoren, Vernetzer, Weichmacher, Füllstoffe, Pigmente, Lösemittel, Haftvermittler, Trocknungsmittel, Rheologiehilfsmittel und Stabilisatoren geeignet.

Bevorzugt enthält eine solche feuchtigkeitshärtende Zusammensetzung mindestens einen Katalysator, der die Vernetzung von Silangruppen-haltigen Polymeren beschleunigt. Dafür geeignet sind insbesondere Metallkatalysatoren und/oder stickstoffhaltige Verbindungen.

Geeignete Metallkatalysatoren sind Verbindungen von Titan, Zirkonium, Aluminium und Zinn, insbesondere Organozinn-Verbindungen, Organotitanate, Organozirkonate und Organoaluminate, wobei diese Metallkatalysatoren insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen und Dialkylpyrophosphatgruppen aufweisen.

Besonders geeignete Organozinn-Verbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat und Dioctylzinndiacetylacetonat, sowie AIkylzinnthioester.

Besonders geeignete Organotitanate sind die Folgenden:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy und 2-Ethylhexoxy geeignet sind.

Ganz besonders geeignet sind Bis(Ethylacetoacetato)-diisobutoxy-titan(IV), Bis(Ethylacetoacetato)-diisopropoxy-titan(IV), Bis(Acetylacetonato)-diisopro-poxy-titan(IV), Bis(Acetylacetonato)-diisobutoxy-titan(IV), Tris(oxyethyl)amin-isopropoxy-titan(IV), Bis[tris(oxyethyl)amin]-diisopropoxy-titan(IV), Bis(2-Ethylhexan-1,3-dioxy)-titan(IV), Tris[2-((2-Aminoethyl)amino)ethoxy]-ethoxy-titan(IV), Bis(Neopentyl(diallyl)oxy-diethoxy-titan(IV), Titan(IV)-tetrabutanolat, Tetra-(2-ethylhexyloxy)titanat, Tetra-(isopropoxy)titanat und Polybutyltitanat. Insbesondere geeignet sind die kommerziell erhältlichen Typen Tyzor^{®} AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React^{®} KR^{®} TTS, 7, 9QS, 12, 26S, 33DS, 38S, 39DS, 44, 134S, 138S, 133DS, 158FS oder LICA^{®} 44 (alle von Kenrich Petrochemicals).

Besonders geeignete Organozirkonate sind die kommerziell erhältlichen Typen Ken-React^{®} NZ^{®} 38J, KZ^{®} TPPJ, KZ^{®} TPP, NZ^{®} 01, 09, 12 38, 44 oder 97 (alle von Kenrich Petrochemicals) und Snapcure^{®} 3020, 3030, 1020 (alle von Johnson Matthey & Brandenberger).

Ein besonders geeignetes Organoaluminat ist der kommerziell erhältliche Typ K-Kat 5218 (von King Industries).

Als Katalysator geeignete stickstoffhaltige Verbindungen sind insbesondere Amine wie insbesondere N-Ethyl-diisopropylamin, N,N,N',N'-Tetramethyl-al-kylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxyanstelle der Methoxygruppen am Silicium; Amidine wie insbesondere 1,8-Di-azabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Dio-tolylguanidin, 2-tert-Butyl-1,1,3,3-tetramethylguanidin; und Imidazole wie insbesondere N-(3-Trimethoxysilylpropyl)-4,5-dihydroimidazol und N-(3-Triethoxy-silylpropyl)-4,5-dihydroimidazol.

Insbesondere geeignet sind auch Kombinationen verschiedener Katalysatoren, insbesondere Kombinationen aus mindestens einem Metallkatalysator und mindestens einer stickstoffhaltigen Verbindung.

Als Katalysator bevorzugt sind Organozinn-Verbindungen, Organotitanate, Amine, Amidine, Guanidine und Imidazole. Besonders bevorzugt sind Organotitanate und Amidine.

Weitere geeignete Bestandteile einer solchen feuchtigkeithärtenden Zusammensetzung sind insbesondere die folgenden Hilfs- und Zusatzmittel:
- Haftvermittler und/oder Vernetzer, insbesondere Silane wie die bereits als Katalysator erwähnten Aminosilane, Aminosilane mit sekundären Aminogruppen, wie insbesondere N-Phenyl-, N-Cyclohexyl- und N-Alkylaminosilane, weiterhin Mercaptosilane, Epoxysilane, (Meth)acrylosilane, Anhydridosilane, Carbamatosilane, Alkylsilane und Iminosilane, sowie oligomere Formen dieser Silane, sowie Addukte aus primären Aminosilanen mit Epoxysilanen oder (Meth)acrylosilanen oder Anhydridosilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan und die entsprechenden Silane mit Ethoxygruppen anstelle der Methoxygruppen, sowie oligomere Formen dieser Silane;
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- und Sulfonsäureester, Polybutene oder von natürlichen Fetten oder Ölen abgeleitete Fettsäuremethyl- oder -ethylester, auch "Biodiesel" genannt;
- Lösemittel;
- anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Trocknungsmittel, insbesondere Tetraethoxysilan, Vinyltrimethoxy- oder Vinyltriethoxysilan und Organoalkoxysilane, welche in α-Stellung zur Silangruppe eine funktionelle Gruppe aufweisen, insbesondere N-(Methyldime-thoxysilylmethyl)-O-methyl-carbamat, (Methacryloxymethyl)silane, Methoxymethylsilane, Orthoameisensäureester, sowie Calciumoxid oder Molekularsiebe;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Stabilisatoren gegen Oxidation, Wärme, Licht und UV-Strahlung;
- natürliche Harze, Fette oder Öle wie Kolophonium, Schellack, Leinöl, Rizinusöl und Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid und Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- und Tris(isopropylphenyl)phosphate unterschiedlichen Isopropylierungsgrades, Resorcinol-bis(diphenylphosphat), Bisphenol-A-bis(diphenylphosphat) und Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in feuchtigkeitshärtenden Zusammensetzungen eingesetzte Substanzen.

Es kann sinnvoll sein, gewisse Bestandteile vor dem Einmischen in die feuchtigkeitshärtende Zusammensetzung chemisch oder physikalisch zu trocknen.

Die bei Raumtemperatur applizierbare feuchtigkeitshärtende Zusammensetzung kann neben dem Polymer mit Endgruppen der Formel (I) weitere Silangruppen-haltige Oligo- oder Polymere enthalten.

Sie ist in einer bevorzugten Ausführungsform frei von Organozinn-Verbindungen. Dies kann aus ökoligischen und/oder toxikoligischen Gründen vorteilhaft sein.

Sie setzt bei ihrer Aushärtung in einer bevorzugten Ausführungsform kein Methanol frei. Dies kann aus ökoligischen und/oder toxikoligischen Gründen vorteilhaft sein.

Die bei Raumtemperatur applizierbare feuchtigkeitshärtende Zusammensetzung wird vorzugsweise unter Ausschluss von Feuchtigkeit hergestellt und aufbewahrt. Typischerweise ist die Zusammensetzung in einer geeigneten Verpackung oder Anordung, wie insbesondere einem Fass, einem Beutel oder einer Kartusche, unter Ausschluss von Feuchtigkeit lagerstabil.

Die bei Raumtemperatur applizierbare feuchtigkeitshärtende Zusammensetzung kann in Form einer einkomponentigen oder in Form einer zweikomponentigen Zusammensetzung vorliegen.

Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist.

Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der Zusammensetzung auf mindestens einen Festkörper oder Artikel kommen die vorhandenen Silangruppen und gegebenenfalls vorhandene weitere feuchtigkeitsreaktive Gruppen in Kontakt mit Feuchtigkeit, wodurch die Zusammensetzung aushärtet. Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt ein Mass für die Aushärtungsgeschwindigkeit dar.

Die bei Raumtemperatur applizierbare feuchtigkeitshärtende Zusammensetzung verfügt im ausgehärteten Zustand über ausgeprägt elastische Eigenschaften, insbesondere eine hohe Festigkeit und hohe Dehnbarkeit, eine gute Wärmebeständigkeit und gute Haftungseigenschaften auf diversen Substraten. Dadurch eignet sie sich für eine Vielzahl von Verwendungen, insbesondere als Faserverbundwerkstoff (Composite), Vergussmasse, Dichtstoff, Klebstoff, Belag, Beschichtung oder Anstrich für Bau- und Industrieanwendungen, beispielsweise als Elektroisolationsmasse, Spachtelmasse, Fugendichtstoff, Schweiss- oder Bördelnahtdichtstoff, Parkettklebstoff, Montageklebstoff, Karrosserieklebstoff, Scheibenklebstoff, Sandwichelementklebstoff, Bodenbelag, Bodenbeschichtung, Balkonbeschichtung, Dachbeschichtung, Betonschutzbeschichtung, Parkhausbeschichtung sowie als Schutzanstrich gegen Korrosion, als Versiegelung, Anstrich, Lack und Primer.

Besonders geeignet ist die Zusammensetzung als Klebstoff und/oder Dichtstoff, insbesondere für die Fugenabdichtung und für elastische Klebeverbindungen in Bau- und Industrieanwendungen.

Für eine Anwendung als Klebstoff oder Dichtstoff weist die Zusammensetzung bevorzugt eine pastöse Konsistenz mit strukturviskosen Eigenschaften auf. Ein solcher pastöser Dichtstoff oder Klebstoff wird insbesondere aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikationsroboters, auf ein Substrat aufgetragen.

Verklebt oder abgedichtet werden können zwei gleichartige oder zwei verschiedene Substrate.

Geeignete Substrate sind insbesondere
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), sowie faserverstärkte Kunststoffe wie Kohlefaserverstärkte Kunststoffe (CFK), Glasfaser-verstärkte Kunststoffe (GFK) und Sheet Moulding Compounds (SMC), wobei die Kunststoffe bevorzugt mittels Plasma, Corona oder Flammen oberflächenbehandelt sein können;
- beschichtete Substrate, wie pulverbeschichtete Metalle oder Legierungen;
- Farben und Lacke, insbesondere Automobildecklacke.

Die Substrate können bei Bedarf vor dem Applizieren des Klebstoffs oder Dichtstoffs vorbehandelt werden, insbesondere durch physikalische und/oder chemische Reinigungsverfahren oder das Aufbringen eines Haftvermittlers, einer Haftvermittlerlösung oder eines Primers.

Nach dem Verkleben oder Abdichten von zwei Substraten wird ein verklebter oder abgedichteter Artikel erhalten. Ein derartiger Artikel kann ein Bauwerk sein, insbesondere ein Bauwerk des Hoch- oder Tiefbaus, oder er kann ein industrielles Gut oder ein Konsumgut sein, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter; oder der Artikel kann ein Anbauteil davon sein.

Die bei Raumtemperatur applizierbare feuchtigkeitshärtende Zusammensetzung weist eine gute Lagerstabilität und Verarbeitbarkeit auf, vernetzt mit Feuchtigkeit sehr schnell zu einem elastischen Material von hoher Festigkeit und Dehnbarkeit und verfügt im ausgehärteten Zustand über eine besonders gute Wärmebeständigkeit.

Ein Silangruppen-haltiger Heissschmelzklebstoff enthält insbesondere ein bei Raumtemperaur festes Polymer mit Endgruppen der Formel (I) und mindestens einen weiteren Bestandteil. Als weitere Bestandteile geeignet sind insbesondere die folgenden Hilfs- und Zusatzstoffe:
- weitere vernetzungsfähige Polymere, insbesondere Silangruppen- und/oder Isocyanatgruppen aufweisende Polymere;
- nicht-reaktive thermoplastische Polymere, insbesondere Homo- oder Copolymere von ungesättigten Monomeren, insbesondere aus der Gruppe umfassend Ethylen, Propylen, Butylen, Isobutylen, Isopren, Vinylacetat und AI- kyl(meth)acrylat, insbesondere Polyethylen (PE), Polypropylen (PP), Polyisobutylen, Ethylenvinylacetat-Copolymere (EVA) und ataktische Poly-α-Olefine (APAO); weiterhin Polyester, Polyacrylate, Polymethacrylate, Polyacrylamide,Polyacrylonitrile, Polyimide, Polyamide, Polyvinylchloride, Polysiloxane, Polyurethane, Polystyrole, und Kombinationen davon, insbesondere Polyetheramid Copolymere, Styrol-Butadien-Styrol Copolymere, Styrol-Isopren-Styrol Copolymere, Styrol-Ethylen-Butylen-Styrol Coplymere, Styrol-Ethylen-Propylen-Styrol Coplymere; sowie weiterhin Butylkautschuk, Polyisobutylen und Kombinationen davon, weiterhin Asphalt, Bitumen, Rohkautschuk, fluorierter Kautschuk und Celluloseharze;
- Klebrigmacherharze, insbesondere ein Kohlenwasserstoffharz wie insbesondere Cumaron-Inden-Harze, Terpenharze, phenolmodifizierte Terpenharze, natürliche, gegebenenfalls modifizierte, Harze wie insbesondere Kolophonium, Wurzelharz oder Tallölharz, weiterhin α-Methyl-Styroiharze und polymere Milchsäure;
- Weichmacher, insbesondere Carbonsäureester wie Phthalate oder Adipate, Polyole, organische Phosphor- und Sulfonsäureester oder Polybutene;
- Katalysatoren für die Vernetzungsreaktionen, insbesondere Metallkatalysatoren und/oder stickstoffhaltige Verbindungen, insbesondere Organozinn-Verbindungen, Organotitanate, Amine, Amidine, Guanidine und Imidazole;
- Stabilisatoren gegen Oxidation, Wärme, Hydrolyse, Licht und UV-Strahlung, Biocide, Fungizide und flammhemmende Substanzen;
- Trocknungsmittel, insbesondere Tetraethoxysilan, Vinyltrimethoxy- oder Vinyltriethoxysilan und Organoalkoxysilane, welche in α-Stellung zur Silangruppe eine funktionelle Gruppe aufweisen, insbesondere N-(Methyldime-thoxysilylmethyl)-O-methyl-carbamat, (Methacryloxymethyl)silane, Methoxymethylsilane, Orthoameisensäureester, sowie Calciumoxid oder Molekularsiebe;
- Haftvermittler und/oder Vernetzer, insbesondere Silane wie Aminosilane, Mercaptosilane, Epoxysilane, (Meth)acrylosilane, Anhydridosilane, Carbamatosilane, Alkylsilane und Iminosilane;
- anorganische und organische Füllstoffe, insbesondere mineralische Füllstoffe, Molekularsiebe, Kieselsäuren inklusive hochdisperse Kieselsäuren aus Pyrolyseprozessen, industriell hergestellte Russe, Graphit, Metall-Pulver PVC-Pulver oder Hohlkugeln;
- Farbstoffe;
sowie weitere üblicherweise in reaktiven Heissschmelzklebstoffen eingesetzte Substanzen. Es kann sinnvoll sein, gewisse Bestandteile vor der Zugabe chemisch oder physikalisch zu trocknen.

Ein Silangruppen-haltige Heissschmelzklebstoff weist bevorzugt einen Gehalt an bei Raumptemperatur festem Polyurethanpolymer mit Endgruppen der Formel (I) im Bereich von 5 bis 100 Gewichts-%, insbesondere 15 bis 95 Gewichts-%, besonders bevorzugt 30 bis 90 Gewichts-%, am meisten bevorzugt 50 bis 80 Gewichts-%, auf.

Ein Silangruppen-haltige Heissschmelzklebstoff enthält bevorzugt mindestens ein weiteres Polymer ausgewählt aus der Gruppe bestehend aus nicht-reaktiven thermoplastischen Polymeren und Klebrigmacherharzen.

Ein Silangruppen-haltige Heissschmelzklebstoff weist bevorzugt einen Gehalt an Polymeren inklusive dem bei Raumptemperatur festen Silangruppen-haltigem Polyurethanpolymer im Bereich von 70 bis 100 Gewichts-%, besonders bevorzugt 80 bis 100 Gewichts-%, insbesondere 90 bis 100 Gewichts-%, auf. Ein Silangruppen-haltige Heissschmelzklebstoff ist in einer bevorzugten Ausführungsform frei von Organozinn-Verbindungen. Dies kann aus ökologischen und/oder toxikologischen Gründen vorteilhaft sein.

Ein Silangruppen-haltige Heissschmelzklebstoff ist unter Ausschluss von Feuchtigkeit in einer geeigneten Verpackung oder Anordung lagerstabil.

Bei Kontakt mit Feuchtigkeit hydrolysieren die Silangruppen, was schliesslich zu einer Vernetzung des Klebstoffes führt. Für den Fall, dass der Heissschmelzklebstoff neben den Silangruppen auch Isocyanatgruppen enthält, reagieren diese ebenfalls mit Feuchtigkeit, was zusätzlich zur Vernetzung des Klebstoffes beiträgt.

Ein Silangruppen-haltige Heissschmelzklebstoff wird bei seiner Anwendung im flüssigen Zustand auf mindestens ein Substrat appliziert. Dazu wird der Klebstoff vorgängig zumindest soweit erwärmt, dass er flüssig vorliegt. Die Applikation des Klebstoffs erfolgt typischerweise bei einer Temperatur im Bereich von 80 bis 200 °C, insbesondere 100 bis 180 °C.

Während der Verarbeitung weist der unvernetzte Klebstoff eine gute thermische Beständigkeit auf. Dies zeigt sich darin, dass der Klebstoff während einer für die fachgerechte Applikation ausreichenden Zeit, insbesondere bis zu mehreren Stunden, im flüssigen heissen Zustand belassen werden kann, ohne dass seine Viskosität übermässig ansteigt, insbesondere ohne dass eine Gelierung erfolgt, und ohne dass Geruchsimmissionen auftreten.

Der applizierte Klebstoff wird vorteilhaft mit einem zweiten Substrat zu einer Verklebung gefügt, bevor er durch Abkühlung übermässig erstarrt ist.

Das Erstarren des Klebstoffs durch Abkühlen bewirkt einen sehr schnellen Festigkeitsaufbau und eine hohe Anfangshaftfestigkeit der Verklebung. Zusätzlich zu dieser physikalischen Klebstoffaushärtung erfolgt im Klebstoff auch nach dem Erstarren die Vernetzung über Silangruppen und gegebenenfalls Isocyanatgruppen durch Feuchtigkeit, wie vorgängig beschrieben. Diese chemische Vernetzung führt schliesslich zu einem ausgehärteten vernetzten Klebstoff, welcher durch erneutes Erhitzen auf die Applikationstemperatur nicht wieder aufschmelzbar ist.

Geeignete Substrate, welche mit einem Silangruppen-haltigen Heissschmelzklebstoff verklebt werden können, sind insbesondere die bereits genannten Substrate. Bevorzugte Substrate sind Kunststoffe, Textilien, Leder, Holz, Holzwerkstoffe, Polymer-Composites, Papier, Metalle, Farben und Lacke.

Die Substrate können vor dem Applizieren des Klebstoffs vorbehandelt sein, beispielsweise durch eine physikalische und/oder chemische Reinigung oder durch das Aufbringen eines Haftvermittlers, einer Haftvermittlerlösung oder eines Primers.

Verklebt werden können zwei gleichartige Substrate oder zwei verschiedene Substrate. Der Klebstoff wird entweder auf eines der beiden Substrate appliziert und mit dem andern zu einer Verklebung gefügt, oder er kann auf beide zu verklebenden Substrate appliziert werden. Bevorzugt ist das Verkleben von zwei verschiedenen Substraten.

Der Silangruppen-haltige Heissschmelzklebstoff kann insbesondere verwendet werden für Bau- und Industrieanwendungen, insbesondere als Kaschierklebstoff, Laminatklebstoff, Verpackungsklebstoff, Textilklebstoff oder Holzklebstoff. Besonders geeignet ist er für Verklebungen, in welchen die Verklebungsstelle sichtbar ist, insbesondere für das Verkleben von Glas, beispielsweise im Fahrzeug- und Fensterbau, sowie für das Verkleben von Klarsichtverpackungen. Aus der Verwendung eines Silangruppen-haltigen Heissschmelzklebstoffs resultiert ein Artikel.

Bevorzugte Artikel sind Automobil-Innenausstattungsteile wie insbesondere Dachhimmel, Sonnenblende, Instrumententafel, Türseitenteil, Hutablage und dergleichen, Holzfaserwerkstoffe aus dem Duschen- und Badbereich, Möbel-Dekorfolien, Membranfolien mit Textilien wie insbesondere Baumwolle, Polyesterfolien im Bekleidungsbereich, Verbunde aus Textilien und Schäumen für Autoausstattungen, sowie Klarsichtverpackungen.

Ein Silangruppen-haltiger Heissschmelzklebstoff mit einem bei Raumtemperatur festen Polymer mit Endgruppen der Formel (I) weist eine Reihe von Vorteilen auf. Er erlaubt eine niedrige Gefahreneinstufung, da er - je nach eingesetzter Stöchiometrie - einen geringen oder gar keinen Gehalt an monomeren Isocyanaten aufweist. Er ist in einer geeigneten Verpackung lagerstabil. Beim Aufheizen auf eine Temperatur im Bereich von 80 bis 200 °C, insbesondere 100 bis 180 °C, weist er eine Viskosität auf, bei der er gut applizierbar ist, und er weist im flüssigen heissen Zustand eine gute Beständigkeit auf. Der Klebstoff vernetzt auch bei Raumtemperatur unter dem Einfluss von Feuchtigkeit, bildet dabei keine Blasen und führt zu einem optisch und mechanisch hochwertigen Klebeverbund mit ausgezeichneter Haftung und guter Beständigkeit gegenüber Umwelteinflüssen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".

**¹H-NMR-Spektren** wurden in CDCl₃ auf einem Spektrometer des Typs Bruker Ascend 400 bei 400.14 MHz gemessen; die chemischen Verschiebungen δ sind angegeben in ppm relativ zu Tetramethylsilan (TMS), die Kopplungskonstanten J sind angegeben in Hz.

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen; die Absorptionsbanden sind in Wellenzahlen (cm⁻¹) angegeben (Messfenster: 4000-650 cm⁻¹). Der Zusatz "sh" weist auf eine als Schulter erscheinende Bande hin.

**Gaschromatogramme** (GC) wurden gemessen im Temperaturbereich von 60 bis 320 °C mit einer Aufheizrate von 30 °C/min und 15 min Verweilzeit bei 320 °C. Die Injektortemperatur betrug 200 °C. Die Detektion erfolgte mittels Flammenionisation (FID), wobei die Signale via Flächenprozent-Methode ausgewertet wurden.

**Viskositäten** bei **20 °C** wurden auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen. **Viskositäten** bei **160 °C** wurden auf einem thermostatisierten Platten-Platten-Viskosimeter Rheotec RC30 (Plattendurchmesser 25 mm, Abstand 1 mm, Scherrate 10 s⁻¹) gemessen.

### 1. Herstellung von Hydroxysilanen

### Hydroxysilan HS-1a: N-(3-Triethoxysilylpropyl)-2-hydroxypropanamid

In einem Rundkolben wurden 36.00 g (162.6 mmol) 3-Aminopropyltriethoxysilan, 12.07 g (83.7 mmol) L-Lactid und 0.15 g Vinyltriethoxysilan unter Stickstoffatmosphäre während 3 h bei 80 °C gerührt, bis mittels IR-Spektroskopie kein Reaktionsfortschritt mehr festgestellt wurde. Das Rohprodukt wurde während 15 Minuten bei 60 °C und ca. 10 mbar nachbehandelt. Es wurde ein flüssiges Produkt mit einem theoretischen OH-Equivalentgewicht von 293.4 g/Eq erhalten.
**FT-IR:** 3406 sh (O-H), 3322 (N-H Amid), 2974, 2928, 2885, 2736, 1741 (C=O Ester), 1651 (C=O Amid), 1535 (C=O Amid), 1482, 1444, 1411, 1390, 1365, 1279, 1192, 1165, 1100, 1073, 996, 954, 886, 863, 775, 678.
**¹H-NMR:** δ 6.69 (s, 1 H, O=C-N*H*), 4.21 (q, 1 H, (R)₃C*H*, J = 6.8), 3.82 (q, 6 H, Si-O-C*H₂*-CH₃, J = 7.0), 3.28 (m, 2 H, NH-C*H*₂-CH₂-CH₂-Si), 1.65 (m, 2 H, NH-CH₂-C*H₂*-CH₂-Si), 1.42 (d, 3 H, C*H₃*-CH(R)₂, J = 6.8), 1.23 (t, 9 H, Si-O-CH₂-C*H₃*, J = 7.0), 0.65 (t, 2 H, NH-CH₂-CH₂-C*H₂*-Si, J = 8.1).
**GC** (3 Tage nach Herstellung): 96.2% N-(3-Triethoxysilylpropyl)-2-hydroxypro-panamid, 1.7% 3-Aminopropyltriethoxysilan und 2.1% Milchsäureethylester.
**GC** (6 Wochen nach Herstellung): 95.8% N-(3-Triethoxysilylpropyl)-2-hydroxy-propanamid, 1.3% 3-Aminopropyltriethoxysilan und 2.9% Milchsäureethylester.

### Hydroxysilan HS-1b: N-(3-Triethoxysilylpropyl)-2-hydroxypropanamid

In einem Rundkolben wurden 14.01 g (118.6 mmol) L-Milchsäureethylester, 10.00 g Ethanol und 0.15 g Vinyltriethoxysilan unter Stickstoffatmosphäre während 10 Minuten bei 60 °C gerührt. Dann wurden 25.00 g (112.9 mmol) 3-Aminopropyltriethoxysilan und 0.20 g Tytan^{®} TAA (Titanacetylacetonat; von Borica Company Ltd) zugegeben und während 5 h bei 100 °C am Rückfluss gerührt, bis mittels IR-Spektroskopie kein Reaktionsfortschritt mehr festgestellt wurde. Das Rohprodukt wurde während 30 Minuten bei 80 °C und ca. 10 mbar nachbehandelt. Es wurde ein flüssiges Produkt mit einem theoretischen OH-Equivalentgewicht von 293.4 g/Eq erhalten.
**GC** (3 Tage nach Herstellung): 80.4% N-(3-Triethoxysilylpropyl)-2-hydroxypropanamid, 19.6% 3-Aminopropyltriethoxysilan und < 0.1% Milchsäureethylester.

### Hydroxysilan HS-2a: N-(3-Trimethoxysilylpropyl)-2-hydroxypropanamid

In einem Rundkolben wurden 16.21 g (90.4 mmol) 3-Aminopropyltrimethoxysilan, 6.20 g (43.05 mmol) L-Lactid und 0.10 g Vinyltrimethoxysilan unter Stickstoffatmosphäre während einigen Minuten bei 60 °C gerührt, bis aller Feststoff in Lösung war. Die Mischung wurde dann während 48 h unter Stickstoff bei 23 °C stehengelassen. Gemäss IR-Spektroskopie war die Reaktion abgeschlossen. Es wurde ein flüssiges Produkt mit einem theoretischen OH-Equivalentgewicht von 251.4 g/Eq erhalten.
**FT-IR:** 3410 sh (O-H), 3349 (N-H Amid), 2969, 2940, 2841, 1746 (C=O Ester), 1651 (C=O Amid), 1532 (C=O Amid), 1446, 1412, 1367, 1347, 1311, 1279, 1191, 1080, 1038, 963, 884, 864, 808, 776 sh, 677.

### Hydroxysilan HS-2b: N-(3-Trimethoxysilylpropyl)-2-hydroxypropanamid

In einem Rundkolben wurden 12.34 g (118.6 mmol) L-Milchsäuremethylester, 10.00 g Methanol und 0.15 g Vinyltrimethoxysilan unter Stickstoffatmosphäre während 10 Minuten bei 60 °C gerührt. Dann wurden 20.25 g (112.9 mmol) 3-Aminopropyltrimethoxysilan und 0.20 g Tytan^{®} TAA zugegeben und während 6 h bei 90 °C am Rückfluss gerührt, bis mittels IR-Spektroskopie kein Reaktionsfortschritt mehr festgestellt wurde. Das Rohprodukt wurde während 30 Minuten bei 60 °C und ca. 30 mbar nachbehandelt. Es wurde ein flüssiges Produkt mit einem theoretischen OH-Equivalentgewicht von 251.4 g/Eq erhalten.

### Hydroxysilan HS-3: N-(3-Triethoxysilylpropyl)-2-hydroxyacetamid

In einem Rundkolben wurden 21.29 g (96.2 mmol) 3-Aminopropyltriethoxysilan, 5.47 g (47.1 mmol) 1,4-Dioxan-2,5-dion und 0.10 g Vinyltriethoxysilan unter Stickstoffatmosphäre während 2 h bei 100 °C gerührt, bis mittels IR-Spektroskopie kein Reaktionsfortschritt mehr festgestellt wurde. Das Rohprodukt wurde während 10 Minuten bei 40 °C und ca. 30 mbar nachbehandelt. Es wurde ein flüssiges Produkt mit einem theoretischen OH-Equivalentgewicht von 279.4 g/Eq erhalten.
**FT-IR:** 3418 sh (O-H), 3326 (N-H Amid), 2973, 2927, 2885, 2735, 1756 (C=O Ester), 1655 (C=O Amid), 1536 (C=O Amid), 1482, 1443, 1411, 1390, 1366, 1350, 1293, 1192, 1165, 1100, 1072, 953, 880, 849, 772, 680.

### Hydroxysilan HS-4: N-(3-Trimethoxysilylpropyl)-2-hydroxyacetamid

In einem Rundkolben wurden 16.21 g (90.4 mmol) 3-Aminopropyltrimethoxysilan, 5.14 g (44.3 mmol) 1,4-Dioxan-2,5-dion und 0.10 g Vinyltrimethoxysilan unter Stickstoffatmosphäre während 2 h bei 100 °C gerührt, bis mittels IR-Spektroskopie kein Reaktionsfortschritt mehr festgestellt wurde. Das Rohprodukt wurde während 10 Minuten bei 40 °C und ca. 50 mbar nachbehandelt. Es wurde ein flüssiges Produkt mit einem theoretischen OH-Equivalentgewicht von 237.3 g/Eq erhalten.
**FT-IR:** 3414 sh (O-H), 3308 (N-H Amid), 2941, 2841, 1757 (C=O Ester), 1652 (C=O Amid), 1533 (C=O Amid), 1444, 1412, 1350, 1281, 1191, 1076, 892, 808, 771, 679.

**Hydroxysilan *HS-5:*** N-(3-Triethoxysilylpropyl)-2-hydroxy-2-methylpropanamid In einem Rundkolben wurden 15.67 g (118.6 mmol) 2-Hydroxyisobuttersäureethylester und 0.15 g Vinyltriethoxysilan unter Stickstoffatmosphäre während 10 Minuten bei 60 °C gerührt. Dann wurden 25.00 g (112.9 mmol) 3-Aminopropyltriethoxysilan und 0.20 g Tytan^{®} TAA zugegeben und während 6 h bei 130 °C gerührt, bis mittels IR-Spektroskopie kein Reaktionsfortschritt mehr festgestellt wurde. Das Rohprodukt wurde während 30 Minuten bei 80 °C und ca. 10 mbar nachbehandelt. Es wurde ein flüssiges Produkt mit einem theoretischen OH-Equivalentgewicht von 307.5 g/Eq erhalten.
**FT-IR:** 3414 sh (O-H), 3349 (N-H Amid), 2973, 2926, 2881, 2735 sh, 1727 (C=O Ester), 1649 (C=O Amid), 1605 sh, 1533 (C=O Amid), 1465, 1446, 1390, 1359, 1344, 1280, 1240, 1163, 1101, 1077, 993, 953, 842, 777, 679.

### Hydroxysilan HS-6: N-(3-Trimethoxysilylpropyl)-2-hydroxy-2-methylpropanamid

In einem Rundkolben wurden 14.00 g (118.6 mmol) 2-Hydroxyisobuttersäuremethylester und 0.15 g Vinyltrimethoxysilan unter Stickstoffatmosphäre während 10 Minuten bei 60 °C gerührt. Dann wurden 20.25 g (112.9 mmol) 3-Aminopropyltrimethoxysilan und 0.20 g Tytan^{®} TAA zugegeben und während 5 h bei 110 °C gerührt, bis mittels IR-Spektroskopie kein Reaktionsfortschritt mehr festgestellt wurde. Das Rohprodukt wurde während 30 Minuten bei 60 °C und ca. 30 mbar nachbehandelt. Es wurde ein flüssiges Produkt mit einem theoretischen OH-Equivalentgewicht von 265.4 g/Eq erhalten.
**FT-IR:** 3410 sh (O-H), 3353 (N-H Amid), 2969, 2940, 2840, 1746 (C=O Ester), 1650 (C=O Amid), 1609 sh, 1531 (C=O Amid), 1464, 1411, 1368, 1280, 1188, 1078, 1019, 969, 936, 909, 854, 804, 678.

### 2. Herstellung von Isocvanatqruppen aufweisenden Polyurethanpolymeren Polymer NCO-1:

Unter Feuchtigkeitsausschluss wurden 1000 g Polyol Acclaim^{®} 12200 (Polyoxypropylendiol mit niedrigem Ungesättigtheitsgrad, von Bayer; OH-Zahl 11.0 mg KOH/g), 43.6 g Isophorondiisocyanat (Vestanat^{®} IPDI, von Evonik), 126.4 g Diisodecylphthalat (DIDP) und 0.1 g Bismuttris(neodecanoat) (10 Gewichts-% in DIDP) unter stetigem Rühren auf 90 °C aufgeheizt und auf dieser Temperatur belassen, bis der titrimetrisch bestimmte Gehalt an freien Isocyanatgruppen einen Wert stabilen Wert von 0.63 Gewichts-% erreicht hatte. Das Produkt wurde auf Raumtemperatur abgekühlt und unter Ausschluss von Feuchtigkeit aufbewahrt. Es hatte am Folgetag der Herstellung eine Viskosität bei 20 °C von 31 Pa·s.

### Polymer NCO-2:

Unter Feuchtigkeitsausschluss wurden 1000 g Polyol Acclaim^{®} 12200 (Polyoxypropylendiol mit niedrigem Ungesättigtheitsgrad, von Bayer; OH-Zahl 11.0 mg KOH/g), 34.2 g 2,4-Toluylendiisocyanat (Desmodur^{®} T-100, von Bayer), 126.4 g Diisodecylphthalat (DIDP) und 0.1 g Bismuttris(neodecanoat) (10 Gewichts-% in DIDP) unter stetigem Rühren auf 60 °C aufgeheizt und auf dieser Temperatur belassen, bis der titrimetrisch bestimmte Gehalt an freien Isocyanatgruppen einen Wert stabilen Wert von 0.65 Gewichts-% erreicht hatte. Das Produkt wurde auf Raumtemperatur abgekühlt und unter Ausschluss von Feuchtigkeit aufbewahrt. Es hatte am Folgetag der Herstellung eine Viskosität bei 20 °C von 35 Pa·s.

### Polymer NCO-3:

Eine Mischung aus 1'200.0 g bei Raumtemperatur festem, amorphem Polyesterdiol (Dynacoll^{®} 7150, von Evonik; OH-Zahl 43 mg KOH/g) und 1'200.0 g Polyesterdiol (Dynacoll^{®} 7250, von Evonik; OH-Zahl 22 mg KOH/g) wurde während 2h bei 120 °C am Vakuum getrocknet und entgast, dann mit 348.4 g 4,4'-Methylendiphenyldiisocyanat (Desmodur^{®} 44 MC L, von Bayer) versetzt, während 2 h bei 130 °C unter Vakuum gerührt und anschliessend abgekühlt und unter Ausschluss von Feuchtigkeit aufbewahrt. Das erhaltene Polyurethanpolymer war bei Raumtemperatur fest und wies einen titrimetrisch bestimmten Gehalt an freien Isocyanatgruppen von 2.15 Gewichts-% auf.

### 3. Herstellung von Isocvanatosilanen

### Isocyanatosilan IS-1:

In einem Rundkolben wurden 8.00 g (27.3 mmol) Hydroxysilan ***HS-1a,*** 6.06 g (27.3 mmol) Isophorondiisocyanat (Vestanat^{®} IPDI, von Evonik) und 0.03 g Bismuttris(neodecanoat) (10 Gewichts-% in DIDP) unter Stickstoffatmosphäre während 4 h bei 80 °C gerührt und anschliessend 4 Tage unter Ausschluss von Feuchtigkeit bei Raumtemperatur aufbewahrt. Es wurde ein hochviskoses Produkt mit einem titrimetrisch bestimmten Gehalt an freien Isocyanatgruppen von 8.2 Gewichts-% erhalten.
**FT-IR:** 3436 sh, 3312 (N-H Amid), 3090, 2973, 2927, 2894, 2254 (N=C=O), 1704 (C=O Urethan), 1661 (C=O Amid), 1532 (C=O Amid), 1462, 1445, 1411, 1388, 1365, 1303, 1237, 1194, 1164, 1102, 1075, 955, 904, 857, 773.

### Isocyanatosilan IS-2:

In einem Rundkolben wurden 8.00 g (27.3 mmol) Hydroxysilan ***HS-1a,*** 4.74 g (27.3 mmol) 2,4-Toluylendiisocyanat (Desmodur^{®} T-100, von Bayer) unter Stickstoffatmosphäre während 4 h bei 80 °C gerührt und anschliessend 4 Tage unter Ausschluss von Feuchtigkeit bei Raumtemperatur aufbewahrt. Es wurde ein sehr hochviskoses Produkt mit einem titrimetrisch bestimmten Gehalt an freien Isocyanatgruppen von 6.5 Gewichts-% erhalten.
**FT-IR:** 3427 sh, 3295 (N-H Amid), 3099, 2974, 2927, 2885, 2267 (N=C=O), 1732 (C=O Urethan), 1658 (C=O Amid), 1617, 1596, 1537 (C=O Amid), 1445, 1413, 1387, 1367, 1306, 1276, 1221, 1165, 1099, 1074, 995, 953, 874, 767, 703, 677.

### 4. Herstellung von Polymeren mit Endgruppen der Formel (I)

### Polymere SP-1 bis SP-8 (bei Raumtemperatur flüssig)

Für jedes Polymer wurden 100 Gewichtsteile Polymer ***NCO-1*** mit dem in der Tabelle 1 angegebenen Hydroxysilan in der angegebenen Menge vermischt (OH/NCO = 1.10). Die Mischung wurde unter Stickstoffatmosphäre bei 70 °C gerührt, bis mittels IR-Spektroskopie keine Isocyanatgruppen mehr nachweisbar waren (ca. 2 Stunden). Anschliessend wurde die Reaktionsmischung abgekühlt und unter Ausschluss von Feuchtigkeit aufbewahrt. Die Viskosität wurde jeweils am Folgetag der Herstellung bei einer Temperatur von 20 °C gemessen. Die Eigenschaften der erhaltenen Polymere sind in der Tabelle 1 angegeben.

**Tabelle 1: Zusammensetzung und Eigenschaften der Silangruppen-haltigen Polymere SP-1 bis SP-8.**

| **Polymer** | ***SP-1*** | ***SP-2*** | ***SP-3*** | ***SP-4*** | ***SP-5*** | ***SP-6*** | ***SP-7*** | ***SP-8*** |
|---|---|---|---|---|---|---|---|---|
| Polymer ***NCO-1*** | 100.00 | 100.00 | 100.00 | 100.00 | 100.00 | 100.00 | 100.00 | 100.00 |
| Hydroxysilan | ***HS-1a,*** 4.84 | ***HS-1b,*** 4.84 | ***HS-3,*** 4.61 | ***HS-5,*** 5.07 | ***HS-2a,*** 4.15 | ***HS-2b,*** 4.15 | ***HS-4,*** 3.92 | ***HS-6,*** 4.38 |
| Viskosität [Pa·s] | 63 | 125 | 120 | 85 | 128 | 179 | 114 | 295 |

### Polymer SP-9: (bei Raumtemperatur flüssig)

100.00 g Polymer ***NCO-2*** wurden mit 4.99 g Hydroxysilan ***HS-1a*** vermischt. Diese Mischung wurde unter Stickstoffatmosphäre bei 60 °C gerührt, bis mittels IR-Spektroskopie keine Isocyanatgruppen mehr nachweisbar waren (ca. 2 Stunden). Anschliessend wurde die Reaktionsmischung abgekühlt und unter Ausschluss von Feuchtigkeit aufbewahrt.

Die Viskosität am Folgetag der Herstellung betrug 106 Pa·s bei 20 °C.

### Polymer SP-10: (bei Raumtemperatur flüssig)

Eine vorgetrocknete Mischung aus 100.0 g (20 mmol OH) Polyol Acclaim^{®} 12200 (Polyoxypropylendiol mit niedrigem Ungesättigtheitsgrad, von Bayer; OH-Zahl 11.0 mg KOH/g) und 12.25 g Diisodecylphthalat wurde mit 10.83 g Isocyanatosilan ***IS-1*** und 0.15 g g Bismuttris(neodecanoat) (10 Gewichts-% in DIDP) versetzt. Diese Mischung wurde unter Stickstoffatmosphäre bei 80 °C gerührt, bis mittels IR-Spektroskopie keine Veränderung der Isocyanatbande mehr feststellbar war (ca. 2 Stunden). Dann wurden 0.30 g wasserfreies Ethanol zugegeben, während 5 Minuten bei 70 °C eingerührt und die Mischung 15 Minuten bei 80 °C am Vakuum entgast. Danach waren mittels IR-Spektroskopie keine Isocyanatgruppen mehr nachweisbar.

Die Viskosität am Folgetag der Herstellung betrug 128 Pa·s bei 20 °C.

### Polymer SP-11: (bei Raumtemperatur flüssig)

Das Polymer ***SP-11*** wurde wie das Polymer ***SP-10*** hergestellt, aber anstelle des Isocyanatosilans ***IS-1*** wurden 9.82 g Isocyanatosilan ***IS-2*** eingesetzt.

Die Viskosität am Folgetag der Herstellung betrug 46 Pa·s bei 20 °C.

### Polymer SP-12 (bei Raumtemperatur fest)

100.0 g des aufgeschmolzenen Polymers ***NCO-3*** wurden mit 17.28 g Hydroxysilan ***HS-1a*** versetzt. Diese Mischung wurde unter Stickstoffatmosphäre bei 120 °C gerührt, bis mittels IR-Spektroskopie keine Isocyanatgruppen mehr nachweisbar waren (ca. 2 Stunden). Anschliessend wurde die Reaktionsmischung abgekühlt und unter Ausschluss von Feuchtigkeit aufbewahrt.

Die Viskosität am Folgetag der Herstellung betrug 35 Pa·s bei 160 °C.

### 5. Herstellung von bei Raumtemperatur applizierbaren feuchtigkeitshärtenden Zusammensetzungen

### Zusammensetzungen Z-1 bis Z-12

Für jede Zusammensetzung wurden die in den Tabellen 2 oder 3 angegebenen Inhaltsstoffe in den angegebenen Mengen (in Gewichtsteilen) in einem Vakuummischer bei 50 °C unter Feuchtigkeitsausschluss während 30 Minuten zu einer homogenen Paste verarbeitet und aufbewahrt. Jede Zusammensetzung wurde folgendermassen geprüft:
Zur Bestimmung der **Hautbildungszeit** wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.
Zur Bestimmung der mechanischen Eigenschaften wurde die Zusammensetzung auf einer PTFE-beschichteten Folie zu einem Film von 2 mm Dicke ausgegossen, dieser während 2 Wochen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (E-Modul bei 0.5-50 % Dehnung) geprüft.

Die **Shore A-Härte** wurde bestimmt nach DIN 53505 an während 14 Tagen im Normklima ausgehärteten Prüfkörpern.

Diese Resultate sind mit dem Zusatz **"NK**:" versehen.

Als Mass für die Wärmebeständigkeit wurden einige Hanteln, bzw. der Shore A-Prüfkörper, anschliessend an die 2 Wochen im Normklima zusätzlich während 4 Wochen bei 100 °C in einem Umluftofen gelagert und anschliessend auf dieselbe Weise auf Zugfestigkeit, Bruchdehnung und E-Modul, bzw. auf Shore A-Härte, geprüft. Diese Resultate sind mit dem Zusatz **"100°C**:" versehen.

Die Resultate sind in den Tabellen 2 und 3 angegeben.

Die *Thixotropierpaste* wurde hergestellt, indem in einem Vakuummischer 300 g Diisodecylphthalat und 48 g 4,4'-Methylendiphenyldiisocyanat (Desmodur^{®} 44 MC L; von Bayer) vorgelegt, leicht aufgewärmt und anschliessend unter starkem Rühren 27 g Monobutylamin langsam zugetropft wurden. Die entstehende Paste wurde unter Vakuum und Kühlung eine Stunde weitergerührt.

**Tabelle 2: Zusammensetzung und Eigenschaften der Zusammensetzungen Z-1 bis Z-5.**

| **Zusammensetzung** | **Z-1** | ***Z-2*** | **Z-3** | ***Z-4*** | ***Z-5*** |
|---|---|---|---|---|---|
| Polymer | ***SP-1,*** 15.00 | ***SP-2,*** 15.00 | ***SP-3,*** 15.00 | ***SP-4,*** 15.00 | ***SP-5,*** 15.00 |
| Diisodecylphthalat | 20.00 | 20.00 | 20.00 | 20.00 | 20.00 |
| *Thixotropierpaste* | 2.00 | 2.00 | 2.00 | 2.00 | 2.00 |
| Vinyltriethoxysilan | 1.00 | 1.00 | 1.00 | 1.00 | - |
| Vinyltrimethoxysilan | - | - | - | - | 1.00 |
| Socal^{®} U1 S2 ¹ | 10.00 | 10.00 | 10.00 | 10.00 | 10.00 |
| Omyacarb^{®} 5 GU ² | 50.00 | 50.00 | 50.00 | 50.00 | 50.00 |
| Tyzor^{®} IBAY ³ | 1.25 | 1.25 | 1.25 | 1.25 | 1.25 |
| Hautbildungszeit [min] | 55 | 35 | 30 | 60 | 15 |
| **NK:** Shore A | 38 | 32 | 29 | 27 | 32 |
| Zugfestigkeit [MPa] | 1.50 | 1.02 | 0.96 | 0.90 | 1.03 |
| Bruchdehnung [%] | 150 | 135 | 110 | 125 | 125 |
| E-Modul [MPa] | 1.19 | 0.81 | 0.83 | 0.74 | 0.83 |
| **100°C**: Shore A | 28 | 17 | 14 | 17 | 18 |
| Zugfestigkeit [MPa] | 0.94 | 0.63 | 0.51 | 0.54 | 0.61 |
| Bruchdehnung [%] | 125 | 105 | 100 | 135 | 110 |
| E-Modul [MPa] | 0.77 | 0.59 | 0.50 | 0.45 | 0.55 |

| | | | | | |
|---|---|---|---|---|---|
| ¹ gefälltes Calciumcarbonat (von Solvay) ² gemahlenes Calciumcarbonat (von Omya) ³ Bis(ethylacetoacetato)-diisobutoxy-titan(IV) (von Dorf Ketal) | | | | | |

**Tabelle 3: Zusammensetzung und Eigenschaften der Zusammensetzungen Z-6 bis Z-11.**

| **Zusammensetzung** | ***Z-6*** | ***Z-7*** | ***Z-8*** | ***Z-9*** | **Z-10** | **Z-11** |
|---|---|---|---|---|---|---|
| Polymer | ***SP-6*** 15.00 | ***SP-7*** 15.00 | ***SP-8,*** 15.00 | ***SP-9,*** 15.00 | ***SP-10,*** 15.00 | ***SP-11,*** 15.00 |
| Diisodecylphthalat | 20.00 | 20.00 | 20.00 | 20.00 | 20.00 | 20.00 |
| *Thixotropierpaste* | 2.00 | 2.00 | 2.00 | 2.00 | 2.00 | 2.00 |
| Vinyltriethoxysilan | - | - | - | 1.00 | 1.00 | 1.00 |
| Vinyltrimethoxysilan | 1.00 | 1.00 | 1.00 | - | - | - |
| Socal^{®} U1 S2 ¹ | 10.00 | 10.00 | 10.00 | 10.00 | 10.00 | 10.00 |
| Omyacarb^{®} 5 GU ² | 50.00 | 50.00 | 50.00 | 50.00 | 50.00 | 50.00 |
| Tyzor^{®} IBAY ³ | 1.25 | 1.25 | 1.25 | 1.25 | 1.25 | 1.25 |
| Hautbildungszeit [min] | 30 | 20 | 5 | 40 | 85 | 85 |
| **NK:** Shore A | 15 | 16 | 19 | 39 | 25 | 21 |
| Zugfestigkeit [MPa] | 0.45 | 0.42 | 0.55 | 1.37 | 0.85 | 0.62 |
| Bruchdehnung [%] | 85 | 65 | 95 | 145 | 120 | 83 |
| E-Modul [MPa] | 0.48 | 0.53 | 0.57 | 1.12 | 0.66 | 0.64 |

| | | | | | | |
|---|---|---|---|---|---|---|
| ¹ gefälltes Calciumcarbonat (von Solvay) ² gemahlenes Calciumcarbonat (von Omya) ³ Bis(ethylacetoacetato)-diisobutoxy-titan(IV) (von Dorf Ketal) | | | | | | |

### 6. Herstellung von Heissschmelzklebstoffen

### Heissschmelzklebstoff K-1:

100.00 g des bei 140 °C aufgeschmolzenen Polymers ***SP-12*** wurden mit 0.02 g Dibutylzinndilaurat versetzt. Der erhaltene Heissschmelzklebstoff wurde unter Ausschluss von Feuchtigkeit aufbewahrt.

Zur Bestimmung der mechanischen Eigenschaften wurde der Heissschmelzklebstoff in einer beheizbaren Presse zwischen zwei mit PTFE-beschichteten Folien zu einem Film von 1 mm Dicke verpresst, abgekühlt, die mit PTFE-beschichteten Folien entfernt und während 10 Tagen im NK aufbewahrt. Danach wurden hantelförmige Prüfkörper mit einer Länge von 75 mm bei einer Steglänge von 30 mm und einer Stegbreite von 4 mm aus dem Film ausgestanzt und damit die **Zugfestigkeit** (Bruchkraft), **Bruchdehnung** und **E-Modul** (im angegebenen Dehnungsbereich) gemäss DIN EN 53504 bei einer Zuggeschwindigkeit von 200 mm/min bestimmt. Die Resultate sind in der Tabelle 4 angegeben.

**Tabelle 4: Mechanische Eigenschaften des Heissschmelzklebstoffs K-1.**

| | **Heissschmelzklebstoff *K-1*** |
|---|---|
| Zugfestigkeit [MPa] | 0.20 |
| Bruchdehnung [%] | 500 |
| E-Modul (0.5-5%) [MPa] | 1.22 |
| E-Modul (0.5-25%) [MPa] | 0.39 |
| E-Modul (0.5-50%) [MPa] | 0.16 |
| Aspekt | klar, blasenfrei |

## Patentansprüche

1. Polymer mit Endgruppen der Formel (I), 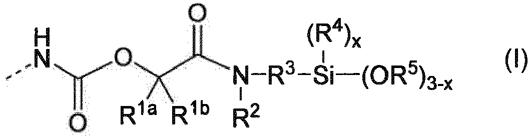 wobei
R^{1a} für einen einwertigen Kohlenwasserstoffrest mit 1 bis 12 C-Atomen steht;
R^{1b} für ein Wasserstoffatom oder einen einwertigen Kohlenwasserstoffrest mit 1 bis 12 C-Atomen steht;
R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht;
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht;
R⁴ für einen Alkylrest mit 1 bis 8 C-Atomen steht;
R⁵ für einen Alkylrest mit 1 bis 10 C-Atomen, der gegebenenfalls Ethergruppen enthält, steht; und
x für 0, 1 oder 2 steht.

2. Polymer gemäss Anspruch 1, **dadurch gekennzeichnet, dass** R^{1a} für einen Methylrest steht und R^{1b} für ein Wasserstoffatom steht.

3. Polymer gemäss einem der Ansprüche 1 oder 2, **dadurch gekennzeichnet, dass** R² für ein Wasserstoffatom oder einen Alkylrest oder einen Cycloalkylrest oder einen Alkoxysilylalkylrest steht.

4. Polymer gemäss einem der Ansprüche 1 bis 3, **dadurch gekennzeichnet, dass** R³ ausgewählt ist aus der Gruppe bestehend aus 1,3-Propylen, 2-Methyl-1,3-propylen, 1,4-Butylen, 3-Methyl-1,4-butylen und 3,3-Dimethyl-1,4-butylen

5. Polymer gemäss einem der Ansprüche 1 bis 4, **dadurch gekennzeichnet, dass** R⁵ für einen Methylrest oder Ethylrest steht.

6. Polymer gemäss einem der Ansprüche 1 bis 5, **dadurch gekennzeichnet, dass** x für 1 oder 0, insbesondere für 0, steht.

7. Polymer gemäss einem der Ansprüche 1 bis 6, **dadurch gekennzeichnet, dass** es eine Funktionalität bezogen auf die Endgruppen der Formel (I) im Bereich von 1 bis 4 aufweist.

8. Polymer gemäss einem der Ansprüche 1 bis 7, **dadurch gekennzeichnet, dass** es ein mittleres Molekulargewicht im Bereich von 1'000 bis 30'000 g/mol aufweist.

9. Polymer gemäss einem der Ansprüche 1 bis 8, **dadurch gekennzeichnet, dass** es ist bei Raumtemperatur flüssig ist und mehrheitlich Polyoxyalkyleneinheiten aufweist.

10. Polymer gemäss einem der Ansprüche 1 bis 8, **dadurch gekennzeichnet, dass** es bei Raumtemperatur fest ist und mehrheitlich Polyestereinheiten und/oder Polycarbonateinheiten aufweist.

11. Verfahren zur Herstellung eines Polymers gemäss einem der Ansprüche 1 bis 10, **dadurch gekennzeichnet, dass**
- mindestens ein Polyol,
- mindestens ein Diisocyanat,
- entweder mindestens ein Lactid der Formel (II) oder mindestens ein Hydroxyester der Formel (III), und
- mindestens ein Aminosilan der Formel (IV)
miteinander umgesetzt werden, 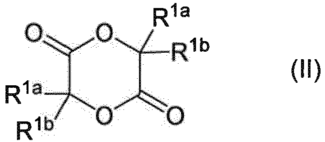 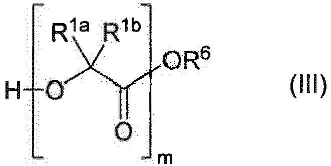 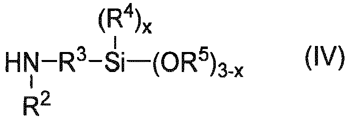 wobei
m für eine ganze Zahl von 1 bis 100; und
R⁶ für einen einwertigen Kohlenwasserstoffrest mit 1 bis 12 C-Atomen stehen.

12. Verfahren gemäss Anspruch 11, **dadurch gekennzeichnet, dass** es über ein Hydroxysilan der Formel (V) als Zwischenprodukt geführt wird.

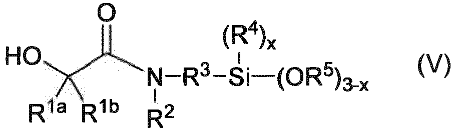

13. Verfahren gemäss Anspruch 12, **dadurch gekennzeichnet, dass** zur Herstellung des Hydroxysilans der Formel (V) ein Lactid der Formel (II) verwendet wird.

14. Verwendung eines Polymers gemäss einem der Ansprüche 1 bis 10 als Bestandteil einer härtbaren Zusammensetzung, welche mindestens einen weiteren Bestandteil umfasst.

15. Verwendung gemäss Anspruch 14, **dadurch gekennzeichnet, dass** die härtbare Zusammensetzung entweder eine bei Raumtemperatur applizierbare feuchtigkeitshärtende Zusammensetzung oder einen Silangruppen-haltigen Heissschmelzklebstoff darstellt.

## Claims

1. Polymer having end groups of the formula (I) 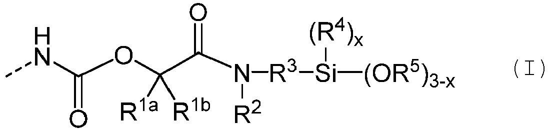 where
R^{1a} is a monovalent hydrocarbyl radical having 1 to 12 carbon atoms;
R^{1b} is a hydrogen atom or a monovalent hydrocarbyl radical having 1 to 12 carbon atoms;
R² is a hydrogen atom or a monovalent hydrocarbyl radical which has 1 to 12 carbon atoms and optionally contains ether groups, ester groups, nitrile groups, amino groups or silane groups;
R³ is a linear or branched alkylene or cycloalkylene radical having 1 to 20 carbon atoms, optionally having aromatic moieties, and optionally having one or more heteroatoms, especially nitrogen atoms;
R⁴ is an alkyl radical having 1 to 8 carbon atoms; R⁵ is an alkyl radical which has 1 to 10 carbon atoms and optionally contains ether groups; and
x is 0, 1 or 2.

2. Polymer according to Claim 1, **characterized in that** R^{1a} is a methyl radical and R^{1b} is a hydrogen atom.

3. Polymer according to either of Claims 1 and 2, **characterized in that** R² is a hydrogen atom or an alkyl radical or a cycloalkyl radical or an alkoxysilylalkyl radical.

4. Polymer according to any of Claims 1 to 3, **characterized in that** R³ is selected from the group consisting of 1,3-propylene, 2-methyl-1,3-propylene, 1,4-butylene, 3-methyl-1,4-butylene and 3,3-dimethyl-1,4-butylene.

5. Polymer according to any of Claims 1 to 4, **characterized in that** R⁵ is a methyl radical or ethyl radical.

6. Polymer according to any of Claims 1 to 5, w **characterized in that** x is 1 or 0, especially 0.

7. Polymer according to any of Claims 1 to 6, **characterized in that** it has a functionality, based on the end groups of the formula (I), in the range from 1 to 4.

8. Polymer according to any of Claims 1 to 7, **characterized in that** it has an average molecular weight in the range from 1'000 to 30'000 g/mol.

9. Polymer according to any of Claims 1 to 8, **characterized in that** it is liquid at room temperature and has a majority of polyoxyalkylene units.

10. Polymer according to any of Claims 1 to 8, **characterized in that** it is solid at room temperature and has a majority of polyester units and/or polycarbonate units.

11. Process for preparing a polymer according to any of Claims 1 to 10, **characterized in that**
- at least one polyol,
- at least one diisocyanate,
- either at least one lactide of the formula (II) or at least one hydroxy ester of the formula (III), and
- at least one aminosilane of the formula (IV)
are reacted with one another, 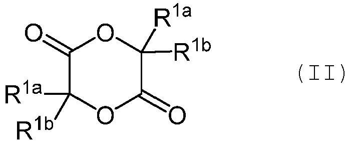 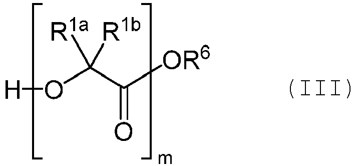 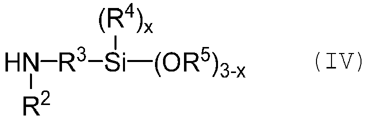 where
m is an integer from 1 to 100; and
R⁶ is a monovalent hydrocarbyl radical having 1 to 12 carbon atoms.

12. Process according to Claim 11, **characterized in that** it is conducted via a hydroxysilane of the formula (V) as intermediate.

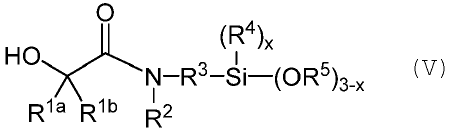

13. Process according to Claim 12, **characterized in that** the hydroxysilane of the formula (V) is prepared using a lactide of the formula (II).

14. Use of a polymer according to any of Claims 1 to 10 as constituent of a curable composition comprising at least one further constituent.

15. Use according to Claim 14, **characterized in that** the curable composition is either a moisture-curing composition applicable at room temperature or a hotmelt adhesive containing silane groups.

## Revendications

1. Polymère comportant des groupes terminaux de Formule (I), 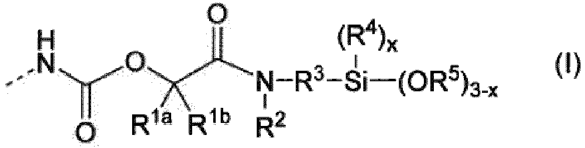 dans laquelle
R^{1a} représente un radical hydrocarboné monovalent ayant 1 à 12 atomes de carbone ;
R^{1b} représente un atome d'hydrogène ou un radical hydrocarboné monovalent ayant 1 à 12 atomes de carbone ;
R² représente un atome d'hydrogène ou un radical hydrocarboné monovalent ayant 1 à 12 atomes de carbone, qui contient éventuellement des groupes éther, des groupes ester, des groupe nitrile, des groupes amino ou des groupes silane ;
R³ représente un radical alkylène ou cycloalkylène linéaire ou ramifié ayant 1 à 20 atomes de carbone, éventuellement comportant des parties aromatiques, et éventuellement comportant un ou plusieurs hétéroatomes, en particulier des atomes d'azote ;
R⁴ représente un radical alkyle ayant 1 à 8 atomes de carbone ;
R⁵ représente un radical alkyle ayant 1 à 10 atomes de carbone, qui contient éventuellement des groupes éther ; et
x représente 0, 1 ou 2.

2. Polymère selon la revendication 1, **caractérisé en ce que** R^{1a} représente un radical méthyle et R^{1b} représente un atome d'hydrogène.

3. Polymère selon l'une des revendications 1 ou 2, **caractérisé en ce que** R² représente un atome d'hydrogène ou un radical alkyle ou un radical cycloalkyle ou un radical alcoxysilylalkyle.

4. Polymère selon l'une des revendications 1 à 3, **caractérisé en ce que** R³ est choisi dans le groupe constitué par le 1,3-propylène, le 2-méthyl-1,3-propylène, le 1,4-butylène, le 3-méthyl-1,4-butylène et le 3,3-diméthyl-1,4-butylène.

5. Polymère selon l'une des revendications 1 à 4, **caractérisé en ce que** R⁵ représente un radical méthyle ou un radical éthyle.

6. Polymère selon l'une des revendications 1 à 5, **caractérisé en ce que** x représente 1 ou 0, en particulier 0.

7. Polymère selon l'une des revendications 1 à 6, **caractérisé en ce qu'**il présente une fonctionnalité, rapportée aux groupes terminaux de Formule (I), dans la plage de 1 à 4.

8. Polymère selon l'une des revendications 1 à 7, **caractérisé en ce qu'**il présente une masse moléculaire moyenne dans la plage de 1 000 à 30 000 g/mol.

9. Polymère selon l'une des revendications 1 à 8, **caractérisé en ce qu'**il est liquide à la température ambiante et comporte en majorité des motifs polyoxyalkylène.

10. Polymère selon l'une des revendications 1 à 8, **caractérisé en ce qu'**il est solide à la température ambiante et comporte en majorité des motifs polyester et/ou des motifs polycarbonate.

11. Procédé de fabrication d'un polymère selon l'une des revendications 1 à 10, **caractérisé en ce qu'**on fait réagir les uns avec les autres
- au moins un polyol,
- au moins un diisocyanate,
- soit au moins un lactide de Formule (II), soit au moins un hydroxyester de Formule (III), et
- au moins un aminosilane de Formule (IV) 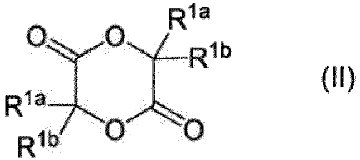 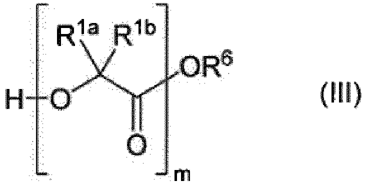 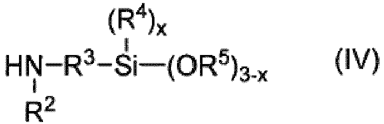
dans lesquelles
m représente un nombre entier de 1 à 100 ; et
r⁶ représente un radical hydrocarboné monovalent ayant 1 à 12 atomes de carbone.

12. Procédé selon la revendication 11, **caractérisé en ce qu'**il est envoyé sur un hydroxysilane de Formule (V) en tant que produit intermédiaire.

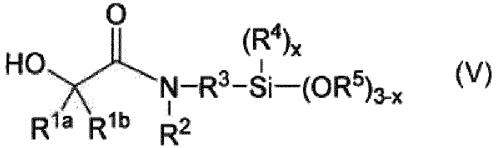

13. Procédé selon la revendication 12, **caractérisé en ce que**, pour la fabrication de l'hydroxysilane de Formule (V), on utilise un lactide de Formule (II).

14. Utilisation d'un polymère selon l'une des revendications 1 à 10 en tant que constituant d'une composition durcissable qui comprend au moins un constituant supplémentaire.

15. Utilisation selon la revendication 14, **caractérisé en ce que** la composition durcissable représente soit une composition applicable à la température ambiante, durcissant sous l'effet de l'humidité, soit un adhésif thermofusible contenant des groupes silane.
